# EUROPEAN PATENT APPLICATION

(11) **EP 4 752 694 A1**
(43) Date of publication of application: **03.06.2026**
(21) Application number: 24884056.3
(22) Date of filing: 24.07.2024
(51) Int. Cl.: G06F 3/04817

(54) **MATERIAL PROCESSING METHOD AND RELATED DEVICE THEREOF**

(30) Priority: 03.11.2023 CN 202311466466; 01.02.2024 CN 202410154292
(71) Applicant: Honor Device Co., Ltd., Shenzhen, Guangdong 518040 (CN)
(72) Inventor: ZHANG, Zhuohua, Shenzhen, Guangdong 518040 (CN); WANG, Long, Shenzhen, Guangdong 518040 (CN); SONG, Xiaoxu, Shenzhen, Guangdong 518040 (CN)
(74) Representative: Gill Jennings & Every LLP
(86) International application number: PCT/CN2024/107223
(87) International publication number: WO 2025/092048

(57) **Abstract**

This application provides a material processing method and a related device thereof, and relates to the field of terminal technologies. The method includes: displaying a first interface of a first application in a full-screen display mode, where the first interface includes a first initial material; enabling a split-screen display mode of a display screen in response to a first target operation, where the split-screen display mode refers to division of the display screen into an original application presentation area, a material presentation area, and an operation area for display, the original application presentation area includes the first interface, the operation area includes a first option, and the material presentation area includes a first material icon; and collecting the first initial material into a target application in response to a first operation for the first option, and newly adding a second material icon to the material presentation area, where the second material icon corresponds to the first initial material. In this application, through an integrated interface that combines the presentation areas and the operation area, favoriting scenarios and types are expanded, leading to enhanced favoriting efficiency and user experience. In addition, material preview can be achieved after collection.

## Description

This application claims priority to Chinese Patent Application No. 202311466466.6, entitled "MATERIAL PROCESSING METHOD" and filed with the China National Intellectual Property Administration on November 03, 2023, and Chinese Patent Application No. 202410154292.8, entitled "MATERIAL PROCESSING METHOD AND RELATED DEVICE THEREOF" and filed with the China National Intellectual Property Administration on February 01, 2024, which are incorporated herein by reference in its entirety.

### TECHNICAL FIELD

This application relates to the field of terminal technologies, and in particular, to a material processing method and a related device thereof.

### BACKGROUND

With continuous development of terminal technologies, an electronic device may support collection of different types of materials in different manners. For example, a mobile phone is taken as an example, a user may copy and save text, capture screenshots, record audio and videos, and the like by using the mobile phone, and may further favorite web pages and the like that are obtained from some applications (such as a news application) in a three-finger swipe-down manner.

During actual processing, material collection involves not only diverse collection manners and various material types, but also a plurality of applications, and the like. In view of this, currently provided material collection manners are diversified yet not unified, and each collection manner further corresponds to a specific material type, which makes it difficult for a user to remember, affecting user experience. Therefore, how to improve the convenience of material collection is an urgent problem that needs to be solved currently.

### SUMMARY

This application provides a material processing method and a related device thereof. Through a unified favoriting manner and an integrated interface that combines presentation areas and an operation area, favoriting scenarios and types are expanded, leading to enhanced favoriting efficiency and user experience.

According to a first aspect, this application provides a material processing method. The method is applied to an electronic device including a display screen. The method includes: displaying a first interface of a first application in a full-screen display mode, where the first interface includes a first initial material; enabling a split-screen display mode of the display screen in response to a first target operation, where the split-screen display mode refers to division of the display screen into an original application presentation area, a material presentation area, and an operation area for display, the original application presentation area includes the first interface, the operation area includes a first option, the material presentation area includes a first material icon, and the first material icon indicates a material that has been collected into a target application; collecting the first initial material into the target application in response to a first operation for the first option, and newly adding a second material icon to the material presentation area, where the second material icon corresponds to the first initial material; displaying a second interface of a second application in the full-screen display mode after the split-screen display mode is disabled, where the second interface includes a second initial material, and a type of the second initial material is different from a type of the first initial material; enabling the split-screen display mode of the display screen in response to a second target operation, where the original application presentation area includes the second interface, the material presentation area includes the first material icon and the second material icon, switching from the first option to a second option is implemented in the operation area, and the first option is different from the second option; collecting the second initial material into the target application in response to a second operation for the second option, and newly adding a third material icon to the material presentation area, where the third material icon corresponds to the second initial material; and switching, in response to a third operation for any material icon, from the split-screen display mode to a material preview interface for display, where the material preview interface corresponds to a material indicated by the material icon.

When the first interface of the first application is displayed in the full-screen display mode, the first interface may not include a status bar. When the second interface of the second application is displayed in the full-screen display mode, the second interface may not include a status bar either.

The target application is a global favorites application in embodiments of this application, and the first target operation is the same as the second target operation.

The first operation, the second operation, and the third operation may be tap operations. The first option corresponds to the type of the first initial material, and the second option corresponds to the type of the second initial material.

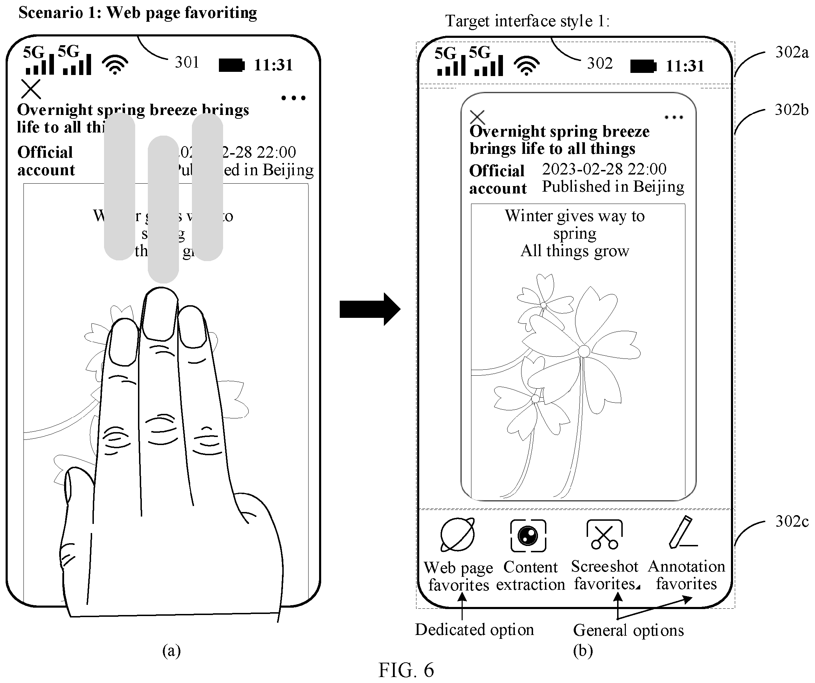

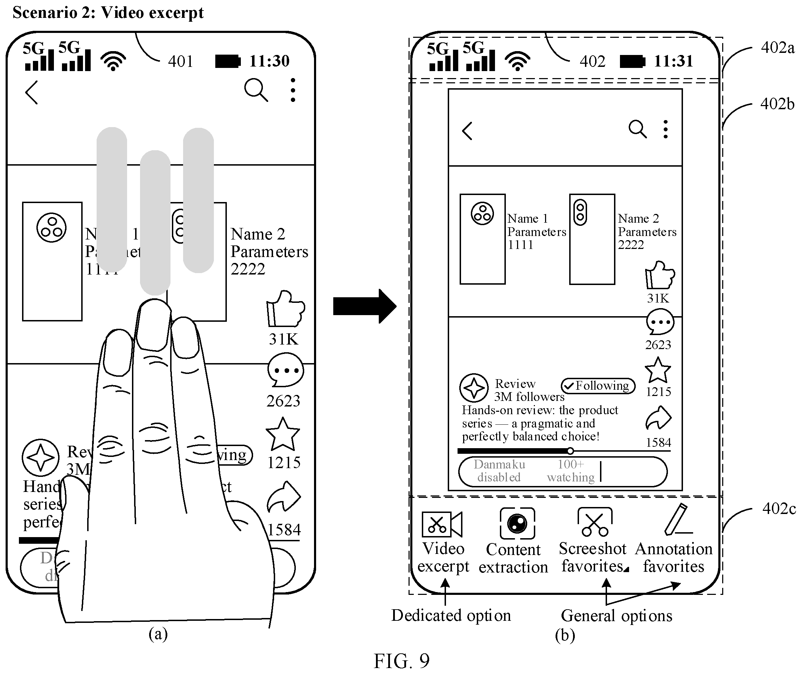

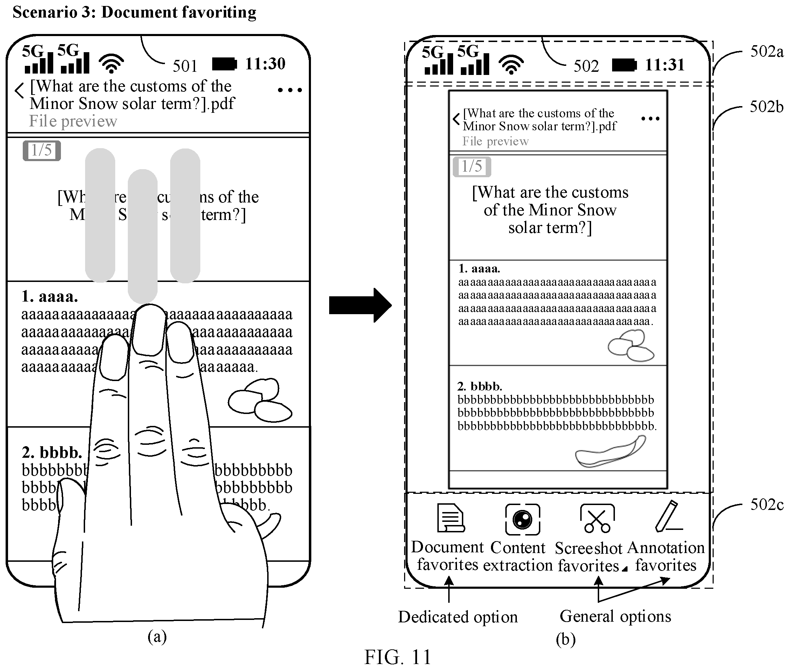

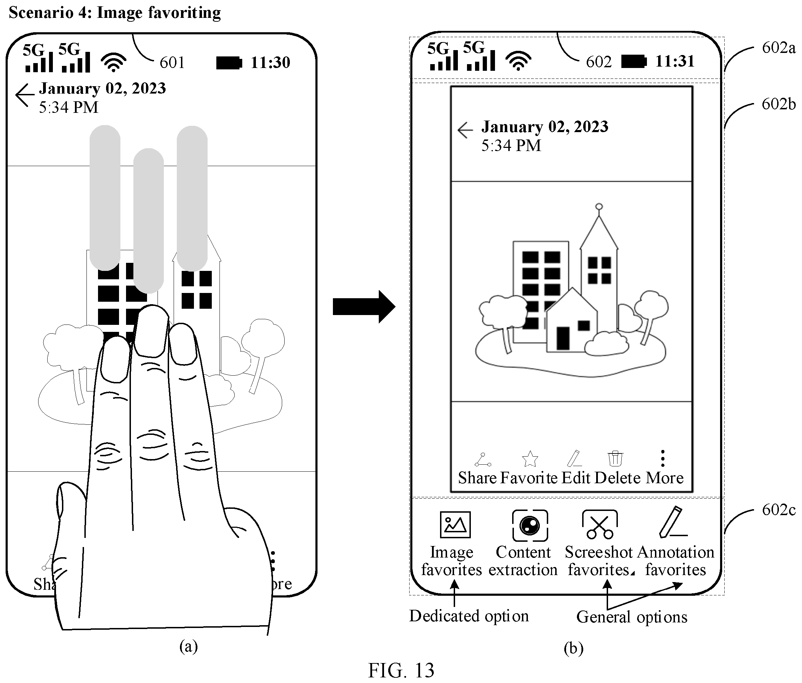

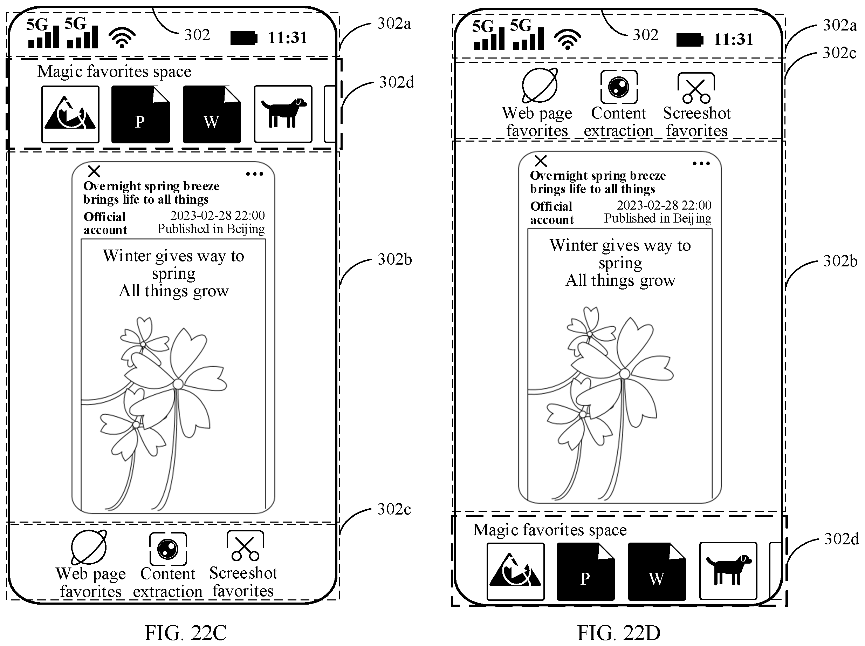

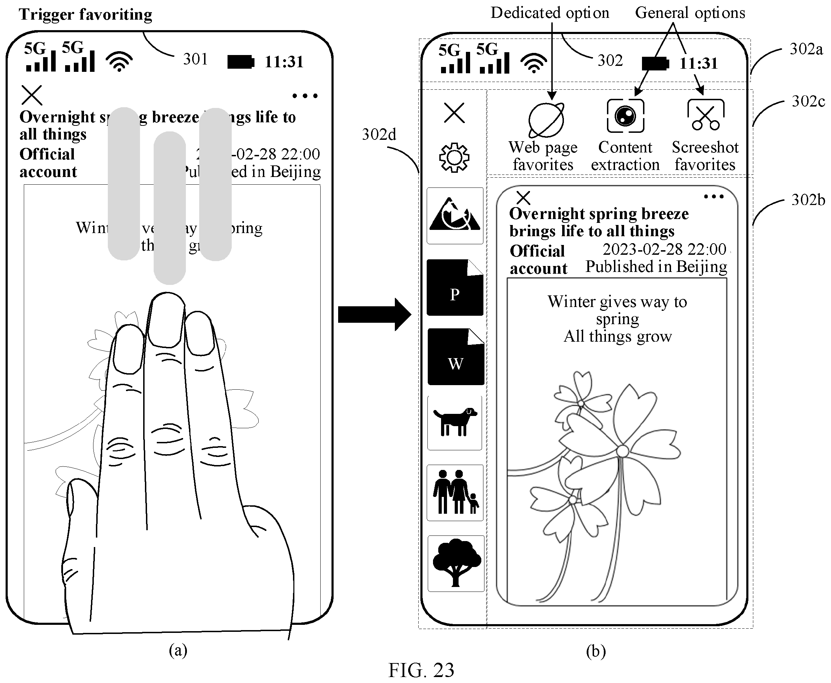

The split-screen display mode may indicate an interface shown in (b) in FIG. 6, an interface shown in (b) in FIG. 11, an interface shown in (b) in FIG. 9, an interface shown in (b) in FIG. 13, interfaces shown in FIG. 22C and FIG. 22D, an interface shown in (b) in FIG. 23, or the like.

It should be understood that for the first interface not including the status bar, after the split-screen display mode of the display screen is enabled, content of the first interface remains unchanged, and only a display area of the first interface is reduced from a size of the full screen to a size of the original application presentation area. Optionally, for the first interface including the status bar, after the split-screen display mode of the display screen is enabled, the original application presentation area may be used for displaying the content of the first interface except the status bar.

Similarly, for the second interface not including the status bar, after the split-screen display mode of the display screen is enabled, content of the second interface remains unchanged, and only a display area of the second interface is reduced from the size of the full screen to the size of the original application presentation area. Optionally, for the second interface including the status bar, after the split-screen display mode of the display screen is enabled, the original application presentation area may be used for displaying the content of the second interface except the status bar.

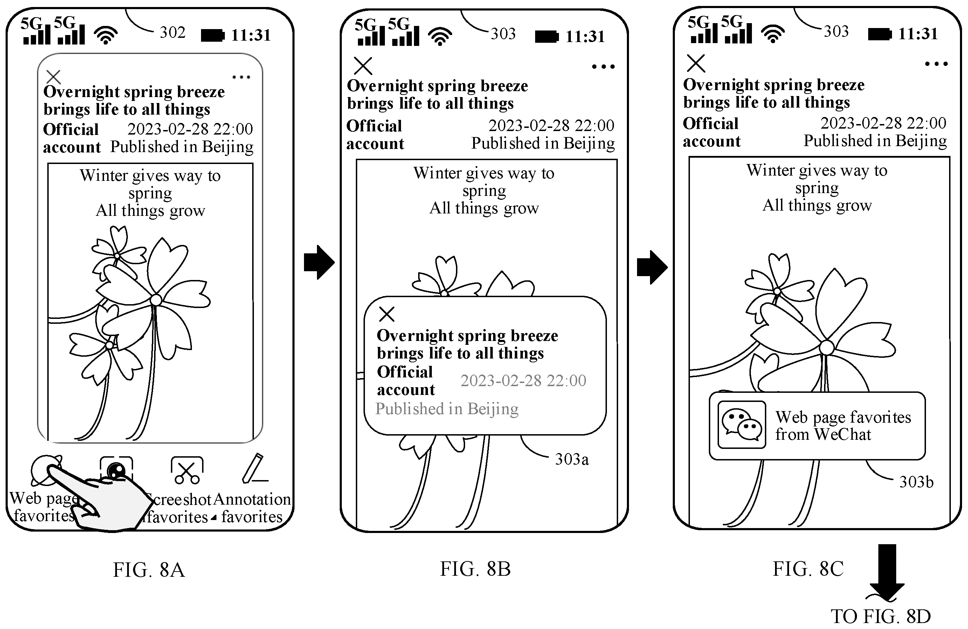

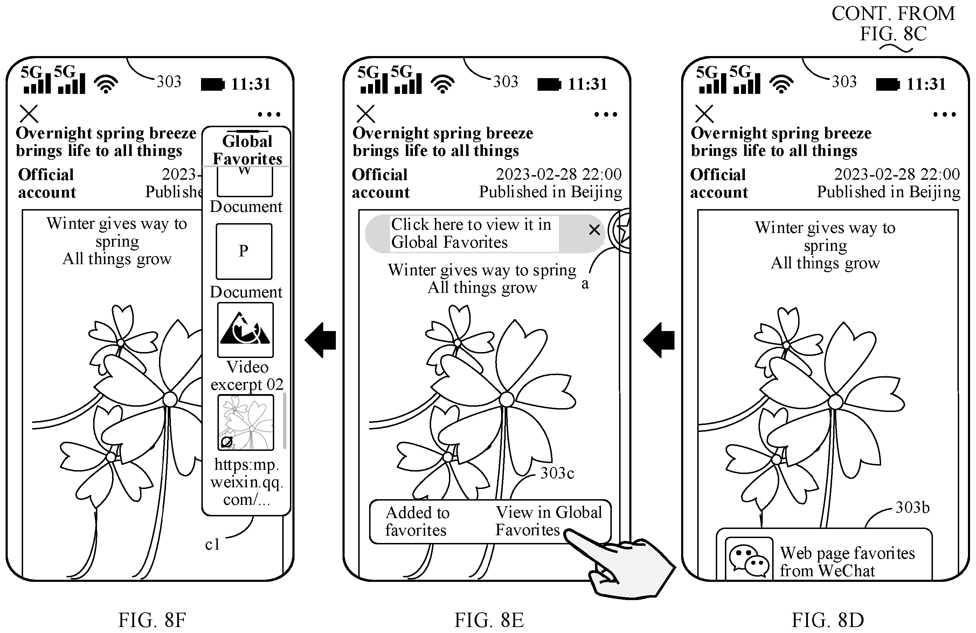

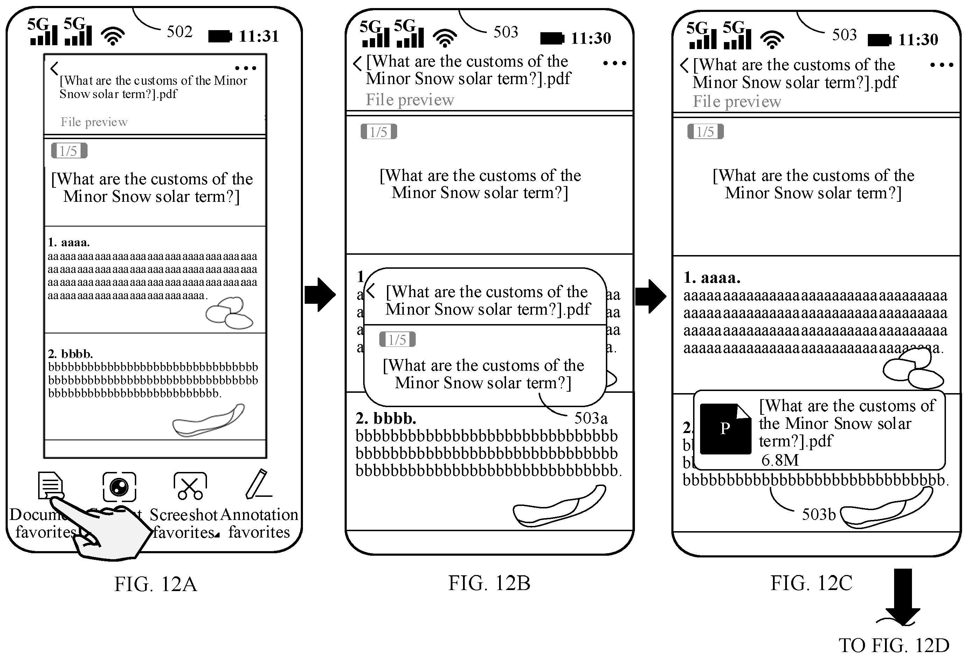

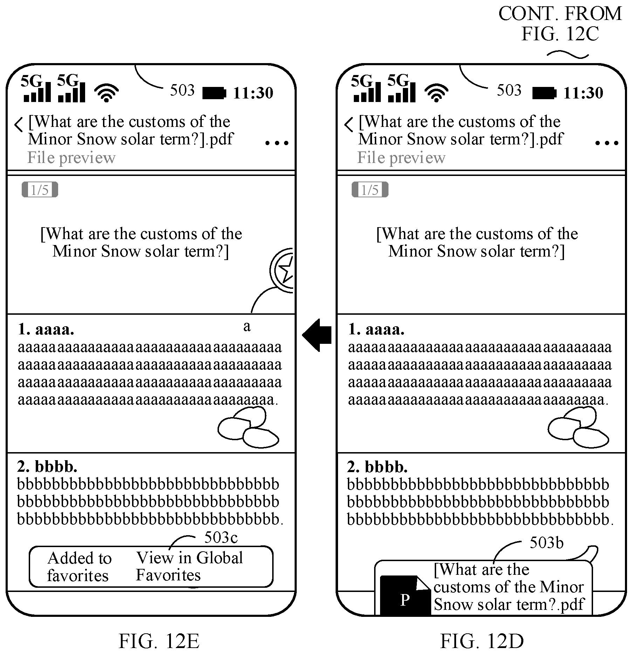

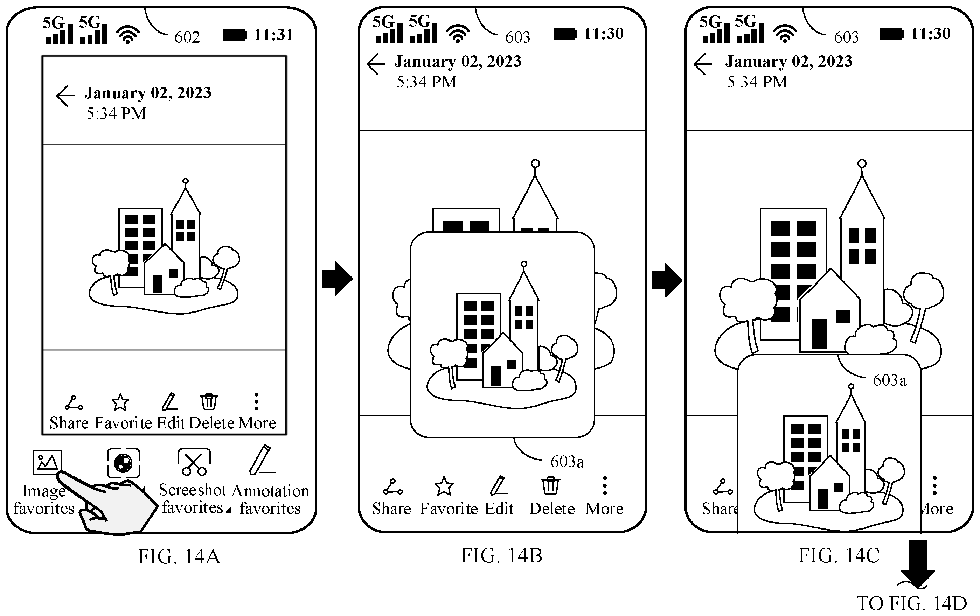

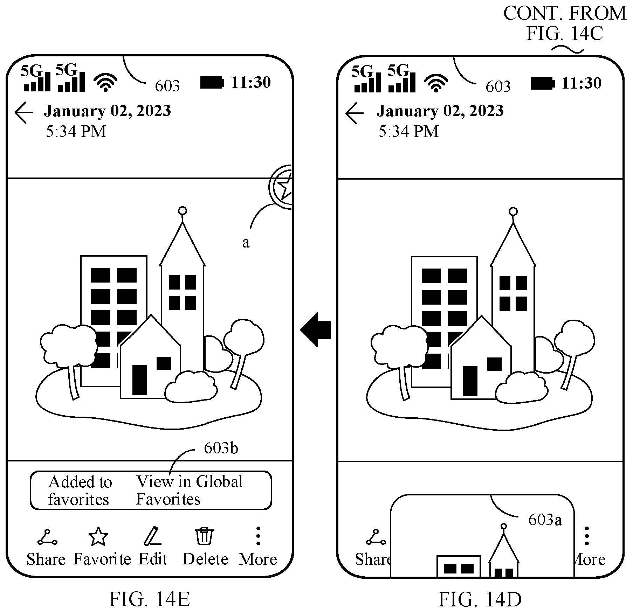

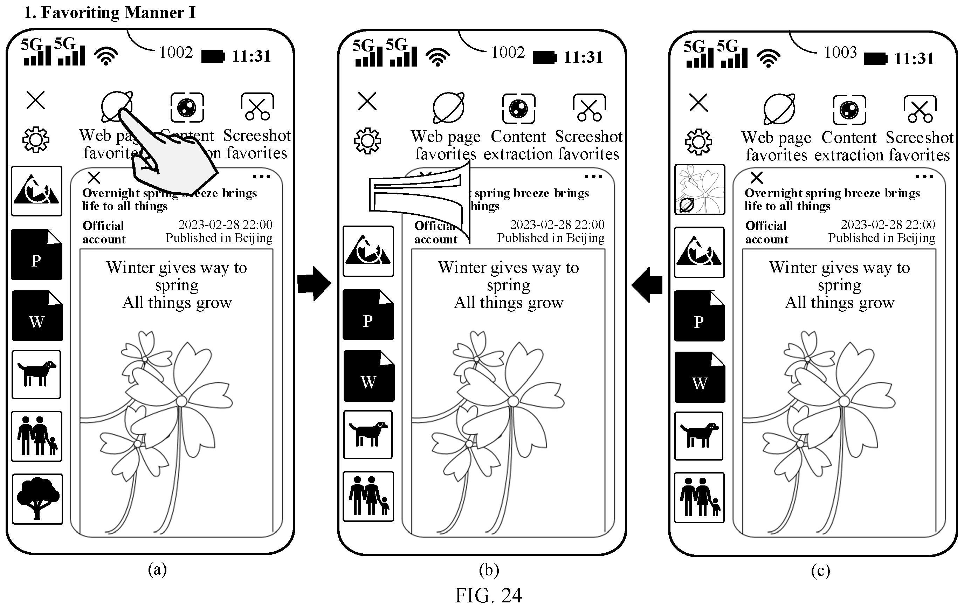

The first initial material and second initial material collection processes may indicate any two of a web page favoriting process shown in FIG. 8A, FIG. 8B, FIG. 8C, FIG. 8D, FIG. 8E, and FIG. 8F, or FIG. 24, a document favoriting process shown in FIG. 12A, FIG. 12B, FIG. 12C, FIG. 12D, and FIG. 12E, an image favoriting process shown in FIG. 14A, FIG. 14B, FIG. 14C, FIG. 14D, and FIG. 14E, and the like.

In the embodiments of this application, the split-screen display mode of the display screen may be triggered through a unified target operation, to indicate that a global favorites mode is enabled. An operation manner is simple and efficient, and favoriting of materials of different sources and different types can be achieved. In addition, when the split-screen display mode is enabled, a manner in which a user expects content retention can be accurately determined, and a corresponding operation option is provided to support material retention. In the split-screen display mode, the original application presentation area that is displayed before the global favorites mode is enabled is displayed together with the new operation area and the material presentation area to facilitate viewing and operations of a user and expand an operation function. In addition, all materials are collected into the global favorites application.

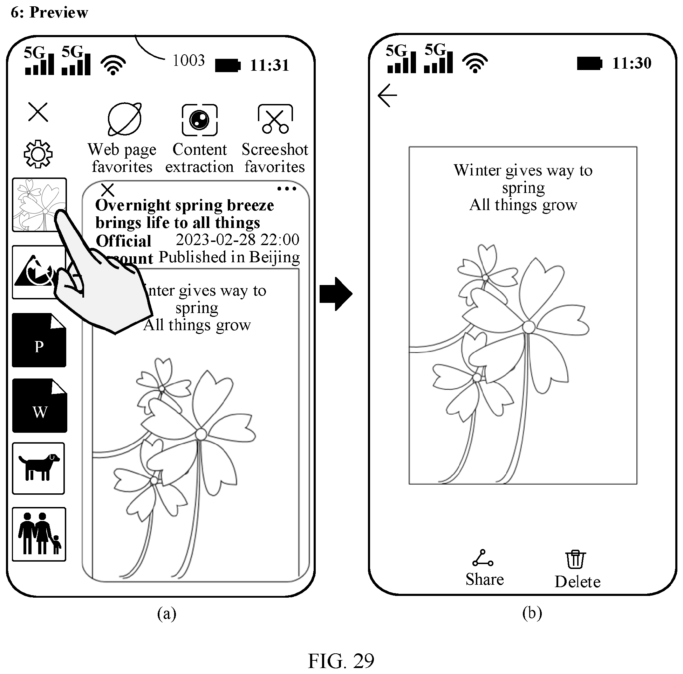

The material preview process may indicate a preview process shown in FIG. 29.

In the embodiments of this application, previewing of a collected material may further be directly triggered by using the material icon shown in the material presentation area in the split-screen display mode.

With reference to the first aspect, in a possible implementation, displaying the second interface of the second application in the full-screen display mode after the split-screen display mode is disabled includes: disabling the split-screen display mode of the display screen in response to a fourth operation, and displaying a third interface in the full-screen display mode, where the third interface includes at least an application icon indicating the second application; and displaying the second interface of the second application in the full-screen display mode in response to a fifth operation for the application icon indicating the second application.

The fourth operation may be an interface switching operation such as a swipe operation; and the fifth operation may be a tap operation.

The third interface may be a desktop.

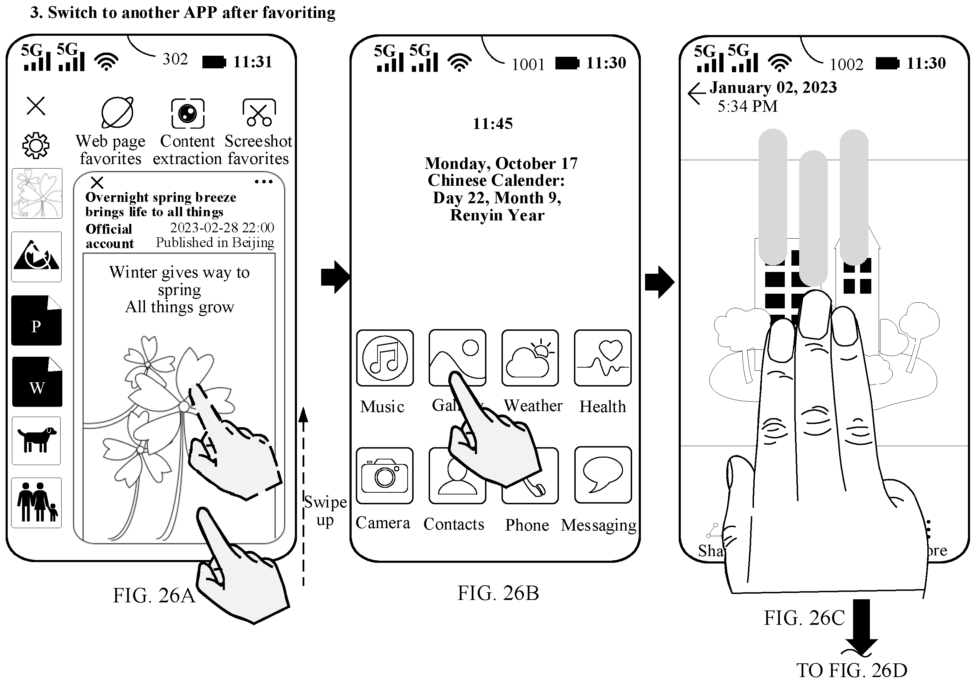

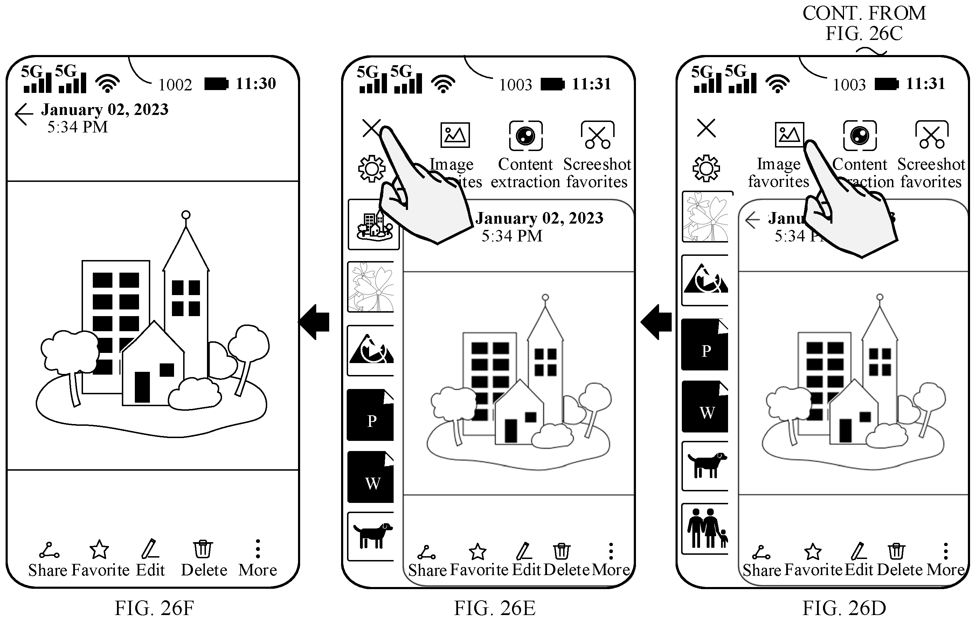

The switching process may indicate a switching process shown in FIG. 26A, FIG. 26B, FIG. 26C, FIG. 26D, FIG. 26E, and FIG. 26F.

In the embodiments of this application, in a case that the global favorites mode of the electronic device is enabled and the split-screen display mode is enabled, the split-screen display mode may be disabled through the fourth operation, and switching from the split-screen display mode to the second application is performed to continue favoriting another material.

With reference to the first aspect, in a possible implementation, the operation area further includes a close button, and displaying the second interface of the second application in the full-screen display mode after the split-screen display mode is disabled includes: disabling the split-screen display mode of the display screen in response to a sixth operation for the close button, and displaying the first interface of the first application in the full-screen display mode; switching, in response to a seventh operation, from the first interface to a third interface for display, where the third interface includes at least an application icon indicating the second application; and displaying the second interface of the second application in the full-screen display mode in response to an eighth operation for the application icon indicating the second application.

The sixth operation and the eighth operation are tap operations, and the seventh operation may be an interface switching operation such as a swipe operation.

The third interface may be a desktop.

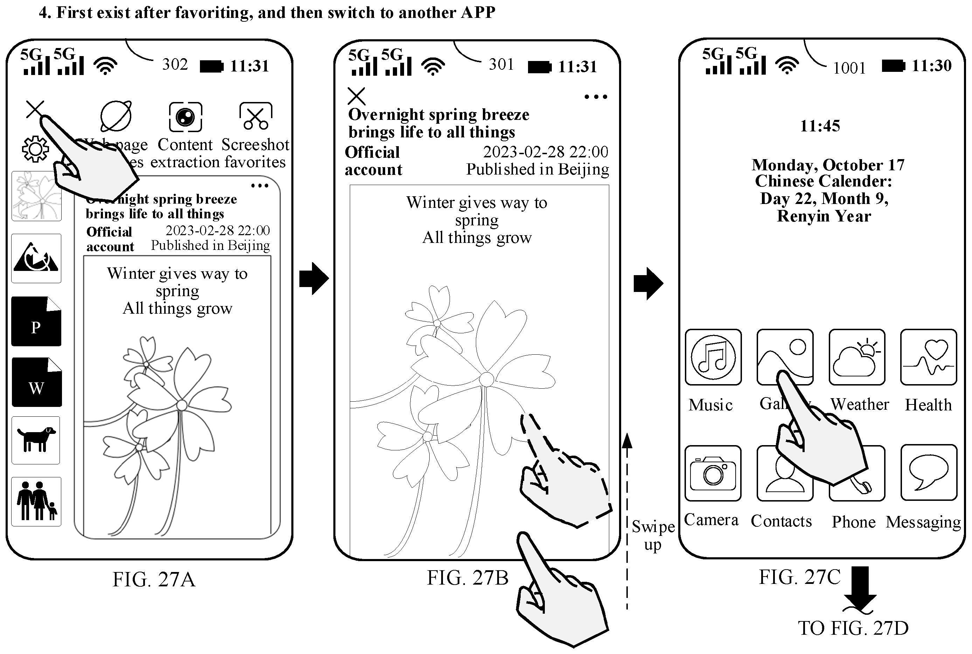

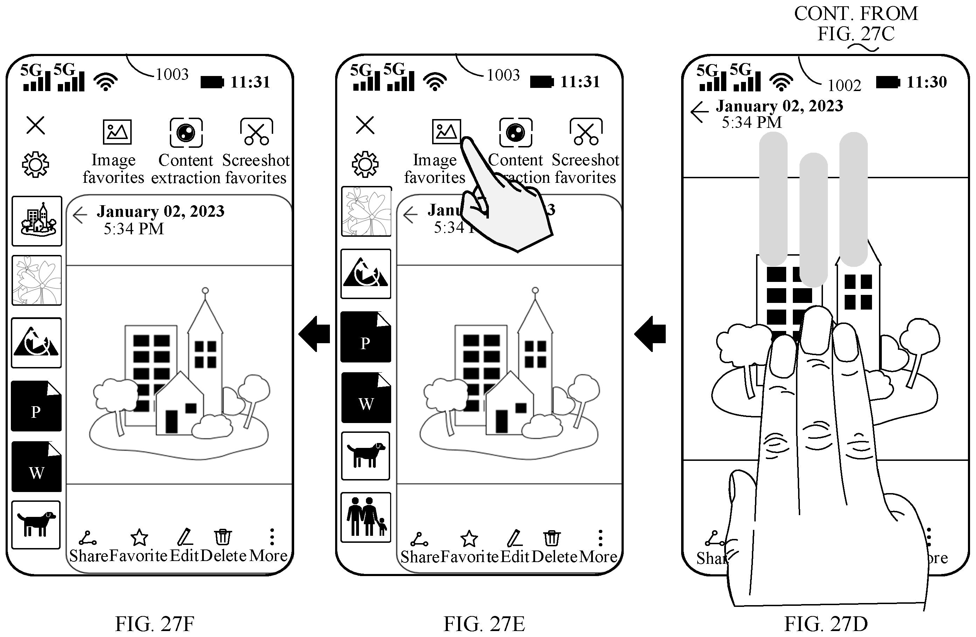

The switching process may indicate a switching process shown in FIG. 27A, FIG. 27B, FIG. 27C, FIG. 27D, FIG. 27E, and FIG. 27F.

In the embodiments of this application, in a case that the global favorites mode of the electronic device is enabled and the split-screen display mode is enabled, first, the split-screen display mode may be disabled through an operation for the close button, to switch to a display interface before the split-screen display mode is enabled, and then interface switching is performed, to switch to the second application to continue favoriting another material.

Optionally, in the embodiments of this application, the split-screen display mode may not be disabled, and direct switching from an interface in the original application presentation area to the second interface of the second application is performed to continue favoriting another material.

With reference to the first aspect, in a possible implementation, the method further includes: before responding to the second target operation, the method further includes: displaying, in response to a first stage of a ninth operation for a sub-material included in the first initial material, the sub-material in a floating manner above the first initial material, where the type of the first initial material is different from a type of the sub-material; collecting the sub-material into the target application in response to a second stage of the ninth operation for the sub-material, where the first stage and the second stage are consecutive; and newly adding a fourth material icon to the material presentation area, where the fourth material icon corresponds to the sub-material.

Optionally, the type of the first initial material is a web page, and the type of the sub-material is an image or the like.

Optionally, the first stage of the ninth operation is a long-press operation, and the second stage of the ninth operation is dragging or throwing.

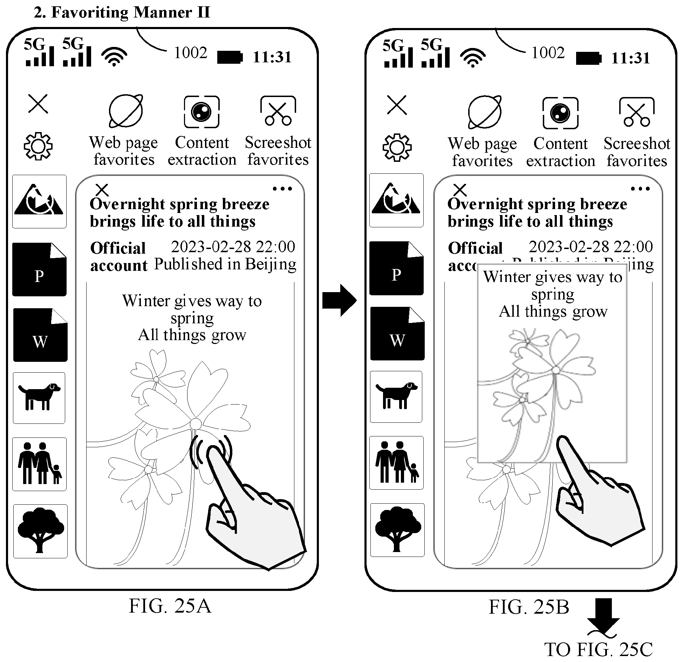

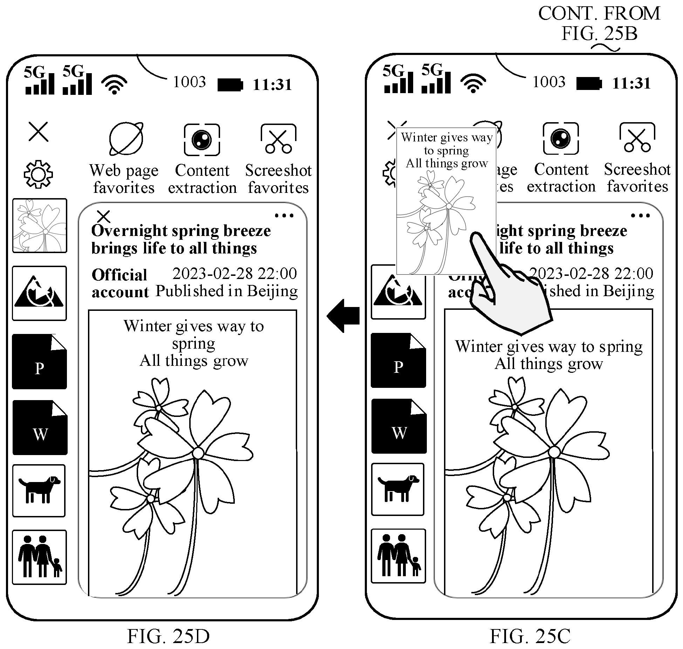

The sub-material collection process may indicate an image collection process shown in FIG. 25A, FIG. 25B, FIG. 25C, and FIG. 25D.

In the embodiments of this application, in a case that the global favorites mode of the electronic device is enabled and the split-screen display mode is enabled, an operation option may not be triggered, and the ninth operation is directly performed in the original application presentation area, to collect a material, thereby expanding a material collection manner.

With reference to the first aspect, in a possible implementation, the method further includes: displaying a fourth interface of a third application in the full-screen display mode; enabling the split-screen display mode of the display screen in response to a third target operation, where the original application presentation area includes the fourth interface, and the material presentation area includes at least the first material icon, the second material icon, and the third material icon; presenting a target material icon in a selected state in response to a tenth operation for the target material icon in the material presentation area, where the target material icon is any one of the plurality of material icons; and distributing, in response to an eleventh operation for the target material icon, a material indicated by the target material icon to the fourth interface.

The third target operation may be the same as the first target operation or the second target operation.

The tenth operation may be a long-press or tap operation, and the eleventh operation may be a drag or throw operation.

In a case that the fourth interface of the third application is displayed in the full-screen display mode, a status bar may be excluded.

It should be understood that for the fourth interface not including the status bar, after the split-screen display mode of the display screen is enabled, content of the fourth interface remains unchanged, and only a display area of the fourth interface is reduced from the size of the full screen to the size of the original application presentation area. Optionally, for the fourth interface including the status bar, after the split-screen display mode of the display screen is enabled, the original application presentation area may be used for displaying the content of the fourth interface except the status bar.

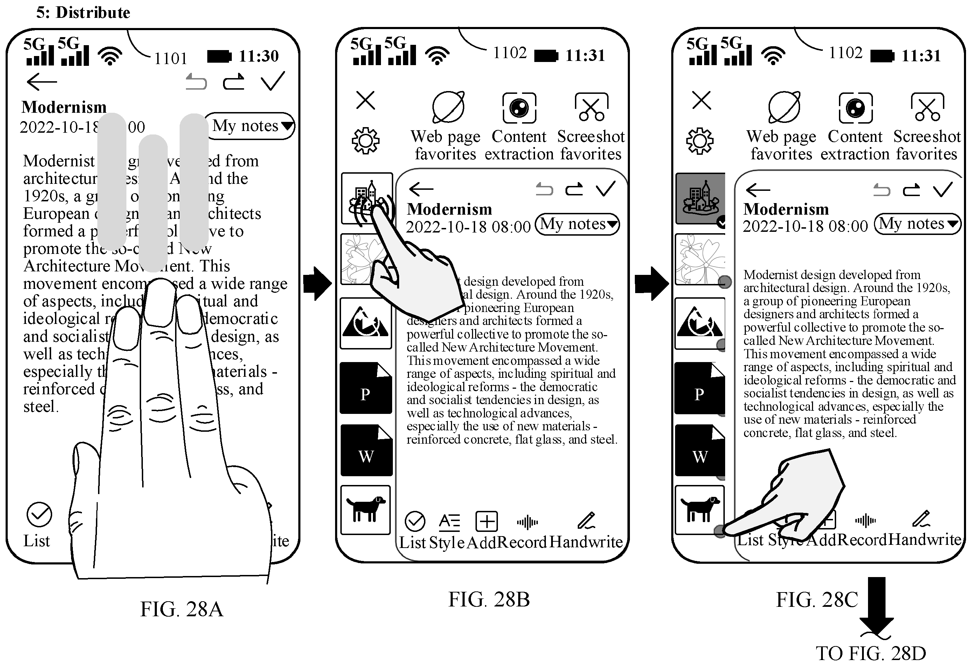

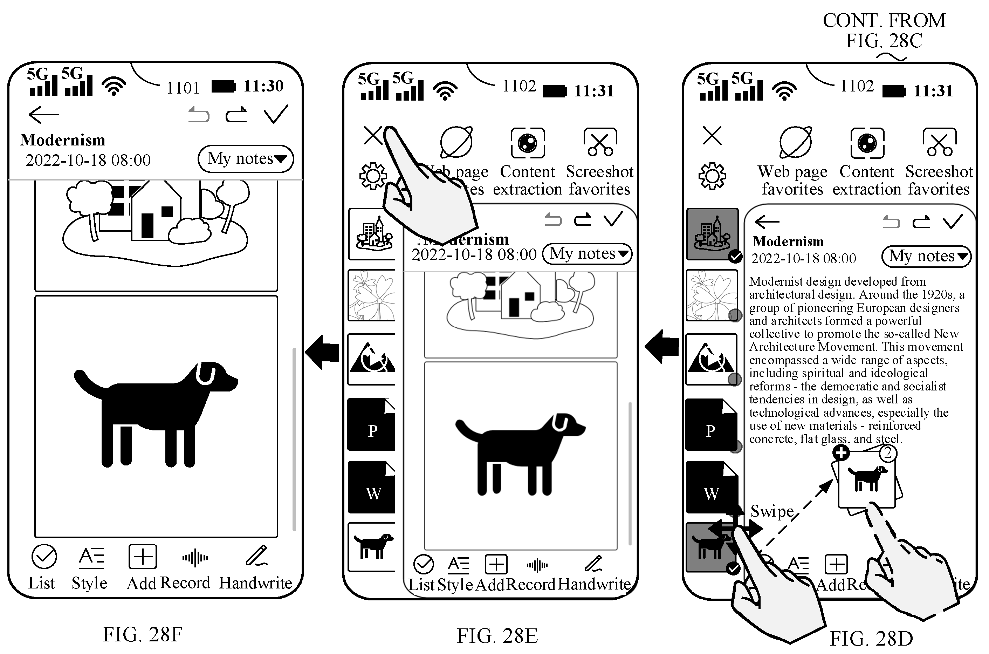

The material distribution process may indicate an image distribution process shown in FIG. 28A, FIG. 28B, FIG. 28C, FIG. 28D, FIG. 28E, and FIG. 28F.

Optionally, the target material icon selection process may be performed multiple times. After the process is performed multiple times, a plurality of materials are selected for distribution.

In the embodiments of this application, an operation may be directly performed between the material presentation area and the original application presentation area in the split-screen display mode, to implement material distribution.

With reference to the first aspect, in a possible implementation, the material preview interface includes a share button, and the method further includes: displaying a share card on the material preview interface in response to a twelfth operation for the share button, where the share card includes a plurality of options indicating different formats, different devices, different applications, saving, and printing; and sharing, in response to a thirteenth operation for the share card, the material indicated by the target material icon based on a selected option.

The twelfth operation and the thirteenth operation may be tap operations.

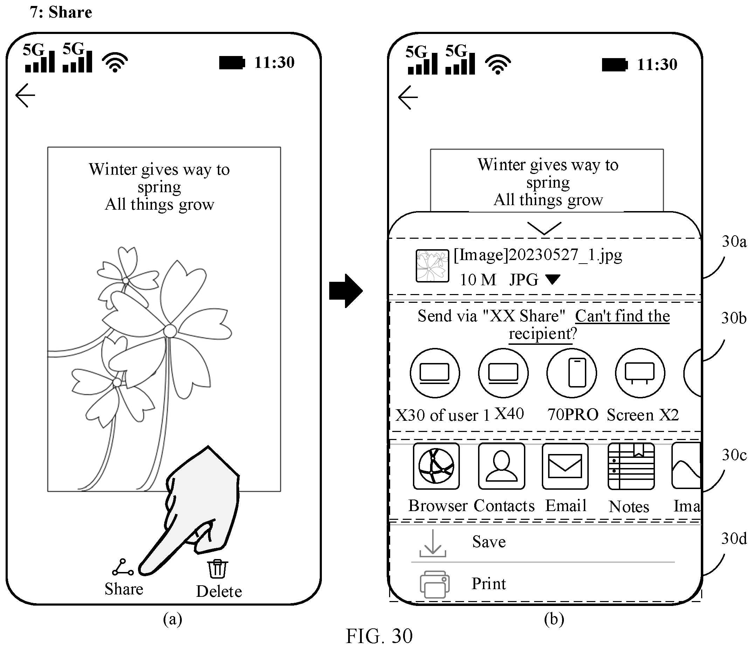

The material sharing process may indicate an image sharing process shown in FIG. 30.

In the embodiments of this application, the material can be directly shared while the material preview interface is displayed.

With reference to the first aspect, in a possible implementation, the type of the first initial material and the type of the second initial material include any two of a web page, a document, and an image.

With reference to the first aspect, in a possible implementation, the first option corresponds to the type of the first initial material, and the second option corresponds to the type of the second initial material. When the type of the first initial material is a web page, the first option is a web page favorites option; when the type of the first initial material is a document, the first option is a document favorites option; or when the type of the first initial material is an image, the first option is an image favorites option. When the type of the second initial material is a web page, the second option is a web page favorites option; when the type of the second initial material is a document, the second option is a document favorites option; or when the type of the second initial material is an image, the second option is an image favorites option.

In the embodiments of this application, when different types of materials are collected or for different scenarios, a corresponding first option or dedicated option may be displayed based on a type of the material.

With reference to the first aspect, in a possible implementation, after responding to the first operation for the first option, the method further includes: displaying a collection state icon, where the collection state icon is displayed in a floating manner in the original application presentation area; obtaining, in response to a fourteenth operation for a first control included in the collection state icon, a first material based on the first initial material; collecting the first material into the target application through the collection state icon in response to a fifteenth operation for a second control included in the collection state icon; and newly adding a fifth material icon to the material presentation area, where the fifth material icon corresponds to the first material.

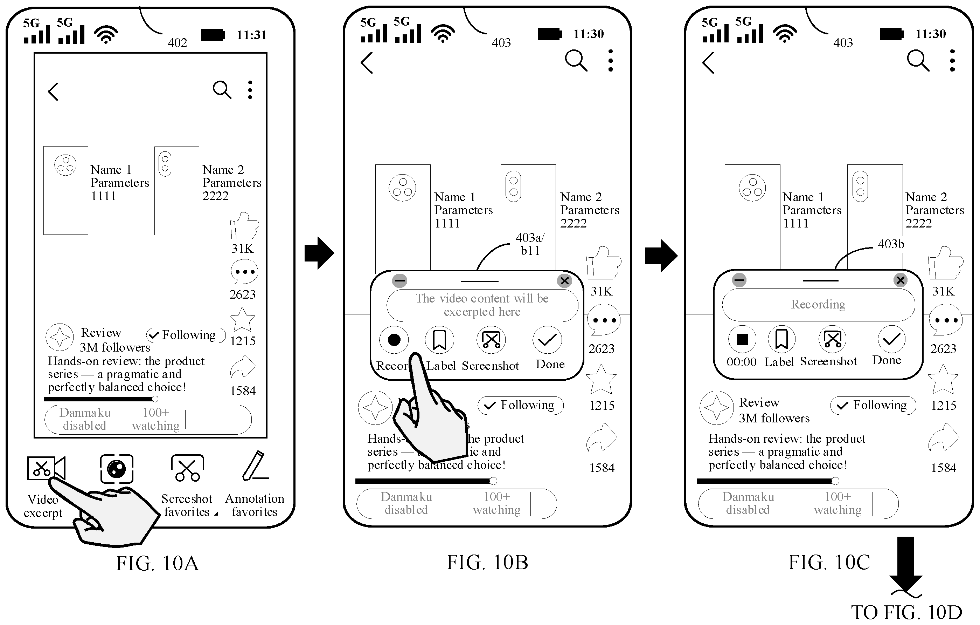

The collection state icon may be 403a shown in FIG. 10B, the first control may be a record control, and the second control may be a done control. The fourteenth operation and the fifteenth operation may be tap operations.

In the embodiments of this application, some materials may be collected based on the triggered collection state icon, thereby expanding favoriting scenarios.

With reference to the first aspect, in a possible implementation, the method further includes: the type of the first initial material is a video, and the first option is a video excerpt option.

In the embodiments of this application, different first options, that is, dedicated options, may be displayed for different material types. For a video, a video excerpt option may be displayed, so that an excerpted video may be collected.

With reference to the first aspect, in a possible implementation, the operation area further includes a screenshot option, and before responding to the second target operation, the method further includes: collecting, in response to a sixteenth operation for the screenshot option, a second material obtained based on the first initial material into the target application, where a type of the second material is an image; and newly adding a sixth material icon to the material presentation area, where the sixth material icon corresponds to the second material.

The sixteenth operation is a tap operation.

In the embodiments of this application, a screenshot may be collected, and a collection manner is simple.

With reference to the first aspect, in a possible implementation, the method further includes: displaying, in response to a seventeenth operation for the screenshot option, an operation option sub-menu in a floating manner above the screenshot option, where the operation option sub-menu includes the screenshot option and a long screenshot option; collecting, in response to an eighteenth operation for the long screenshot option and a nineteenth operation for the original application presentation area, a third material obtained based on the first initial material into the target application, where a type of the third material is a long image; and newly adding a seventh material icon to the material presentation area, where the seventh material icon corresponds to the third material.

The eighteenth operation may be a tap operation.

The nineteenth operation may indicate a swipe operation for the original application presentation area, for example, a down-to-up swipe operation.

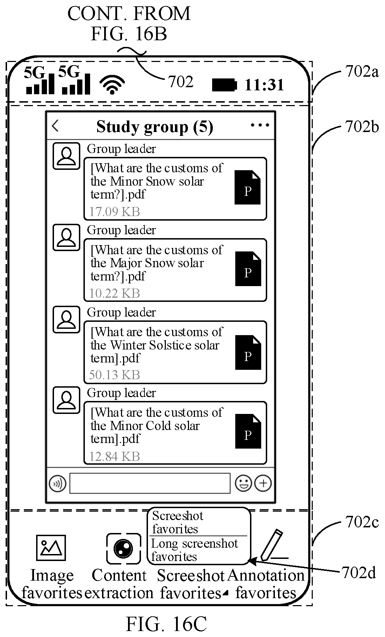

The operation option sub-menu may indicate a menu card 702d shown in FIG. 16C.

Optionally, long screenshot capture is started only in response to the eighteenth operation for the long screenshot option, long screenshot capture is automatically ended after display content is scrolled, and the third material obtained based on the first initial material is collected into the target application.

In the embodiments of this application, display content in the original application presentation area may move upward with swiping or automatically scroll, content in an upper area gradually disappears, and new content is gradually displayed in a lower area, so as to facilitate screenshot capturing.

With reference to the first aspect, in a possible implementation, the operation area further includes a content identification option, and before responding to the second target operation, the method further includes: displaying display content in the original application presentation area in a target form in response to a twentieth operation for the content identification option, and displaying a favorite button, where the favorite button is displayed in a floating manner above the display content; presenting partial display content in a selected state in response to a twenty-first operation; collecting the partial display content in the selected state into the target application in response to a twenty-second operation for the favorite button; and newly adding an eighth material icon to the material presentation area, where the eighth material icon corresponds to the partial display content in the selected state.

The twentieth operation and the twenty-second operation may be tap operations; and the twenty-first operation may be a tap operation or a drag operation.

In the embodiments of this application, in response to the twentieth operation for the content identification option, a system screen identification capability may be triggered, to implement a function of extracting text and images from the display content in the original application presentation area and the like. Then, in response to selection of the content and the operation for favorite button, the selected partial display content may be collected into the target application, thereby expanding material collection scenarios and types.

With reference to the first aspect, in a possible implementation, the target form includes at least any one of a highlighted form, a word-segmented block form, and a sequentially tiled form that is floatingly displayed in the original application presentation area.

With reference to the first aspect, in a possible implementation, the first target operation, the second target operation, and the third target operation are all three-finger swipe-down operations.

Optionally, the target operation may alternatively be a unified knuckle C-shaped swipe operation, or a unified another gesture operation. The gesture operation may be in contact with the display screen, or may be suspended out of contact.

In the embodiments of this application, regardless of how many times the target operation is performed, the target operation is consistently a unified gesture operation, which imposes no memory burden, facilitates learning and use by a user, and enhances user experience.

With reference to the first aspect, in a possible implementation, the material presentation area is located in a left hot zone or a right hot zone of the display screen, and the operation area is located in a top area of the display screen.

In the embodiments of this application, the material presentation area is located in the left hot zone or the right hot zone, which may facilitate operations such as material collection and distribution. Since the operation option in the operation area is used infrequently, the operation area may be located in the top area of the display screen. This arrangement not only facilitates operations for content in the original application presentation area below, but also helps avoid accidental touches of the operation option.

According to a second aspect, this application provides an electronic device. The electronic device includes one or more processors and one or more memories. The one or more memories are coupled to the one or more processors. The memory is configured to store computer program code, the computer program code includes computer instructions, and the one or more processors invoke the computer instructions to cause the electronic device to perform the method described in the first aspect or any implementation of the first aspect.

According to a third aspect, this application provides a computer storage medium, including computer instructions. The computer instructions, when run on an electronic device, cause the electronic device to perform the method described in the first aspect or any implementation of the first aspect.

According to a fourth aspect, an embodiment of this application provides a chip system. The chip system may be applied to an electronic device, and the chip system includes one or more processors. The processor is configured to invoke computer instructions to cause the electronic device to perform the method described in the first aspect or any implementation of the first aspect.

According to a fifth aspect, an embodiment of this application provides a computer program product including instructions. The computer program product, when run on an electronic device, causes the electronic device to perform the method described in the first aspect or any implementation of the first aspect.

It may be understood that the electronic device provided in the second aspect, the computer storage medium provided in the third aspect, the chip system provided in the fourth aspect, and the computer program product provided in the fifth aspect are all configured to perform the method described in the first aspect or any implementation of the first aspect. Therefore, for beneficial effects that can be achieved, refer to beneficial effects of any one of the possible implementations of the first aspect. Details are not described herein again.

### BRIEF DESCRIPTION OF DRAWINGS

FIG. 1 is a diagram of a setting interface corresponding to a favoriting manner according to an embodiment of this application;
FIG. 2 is a diagram of a group of user interfaces related to the favoriting manner provided in FIG. 1;
FIG. 3 is a diagram of Global Favorites in different forms according to an embodiment of this application;
FIG. 4 is a diagram of an example of a floating state icon according to an embodiment of this application;
FIG. 5 is a diagram of switching from a floating state icon to a hidden state icon or a full-screen state according to an embodiment of this application;
FIG. 6 is a diagram of an interface of web page favoriting that is triggered in a three-finger swipe-down manner according to an embodiment of this application;
FIG. 7 is a diagram of a plurality of operation options according to an embodiment of this application;
FIG. 8A, FIG. 8B, FIG. 8C, FIG. 8D, FIG. 8E, and FIG. 8F are diagrams of interfaces of web page favoriting according to an embodiment of this application;
FIG. 9 is a diagram of an interface of video excerpting that is triggered in a three-finger swipe-down manner according to an embodiment of this application;
FIG. 10A, FIG. 10B, FIG. 10C, FIG. 10D, FIG. 10E, and FIG. 10F are diagrams of interfaces of video excerpting according to an embodiment of this application;
FIG. 11 is a diagram of an interface of document favoriting that is triggered in a three-finger swipe-down manner according to an embodiment of this application;
FIG. 12A, FIG. 12B, FIG. 12C, FIG. 12D, and FIG. 12E are diagrams of interfaces of document favoriting according to an embodiment of this application;
FIG. 13 is a diagram of an interface of image favoriting that is triggered in a three-finger swipe-down manner according to an embodiment of this application;
FIG. 14A, FIG. 14B, FIG. 14C, FIG. 14D, and FIG. 14E are diagrams of interfaces of image favoriting according to an embodiment of this application;
FIG. 15A, FIG. 15B, FIG. 15C, FIG. 15D, and FIG. 15E are diagrams of interfaces of screenshot favoriting according to an embodiment of this application;
FIG. 16A, FIG. 16B, and FIG. 16C are diagrams of interface of long screenshot favoriting that is triggered in a three-finger swipe-down manner according to an embodiment of this application;
FIG. 17A, FIG. 17B, FIG. 17C, FIG. 17D, FIG. 17E, and FIG. 17F are diagrams of interfaces of long screenshot favoriting according to an embodiment of this application;
FIG. 18 is a diagram of an interface of extracted content favoriting that is triggered in a three-finger swipe-down manner according to an embodiment of this application;
FIG. 19A, FIG. 19B, FIG. 19C, FIG. 19D, FIG. 19E, and FIG. 19F, and FIG. 20 are diagrams of interfaces of extracted content favoriting according to embodiments of this application;
FIG. 21 is a diagram of another content extraction form according to an embodiment of this application;
FIG. 22A, FIG. 22B, FIG. 22C, and FIG. 22D are diagrams of styles of target interfaces according to an embodiment of this application;
FIG. 23 is a diagram of still another interface of favoriting that is triggered in a three-finger swipe-down manner according to an embodiment of this application;
FIG. 24 is a diagram of Favoriting Manner I according to an embodiment of this application;
FIG. 25A, FIG. 25B, FIG. 25C, and FIG. 25D are diagrams of Favoriting Manner II according to an embodiment of this application;
FIG. 26A, FIG. 26B, FIG. 26C, FIG. 26D, FIG. 26E, and FIG. 26F are diagrams of interfaces of second favoriting according to an embodiment of this application;
FIG. 27A, FIG. 27B, FIG. 27C, FIG. 27D, FIG. 27E, and FIG. 27F are diagrams of interfaces of another second favoriting according to an embodiment of this application;
FIG. 28A, FIG. 28B, FIG. 28C, FIG. 28D, FIG. 28E, and FIG. 28F are diagrams of interfaces of material distribution according to an embodiment of this application;
FIG. 29 is a diagram of an interface of material preview according to an embodiment of this application;
FIG. 30 is a diagram of an interface of material sharing according to an embodiment of this application;
FIG. 31 is an example flowchart of a material processing method according to an embodiment of this application;
FIG. 32 is a diagram of a hardware structure of an electronic device according to an embodiment of this application; and
FIG. 33 is a diagram of a software structure of an electronic device according to an embodiment of this application.

### DESCRIPTION OF EMBODIMENTS

The following clearly and completely describes technical solutions in embodiments of this application with reference to accompanying drawings in the embodiments of this application. In the descriptions of the embodiments of this application, "/" indicates "or" unless otherwise specified. For example, A/B may represent A or B. In the text, "and/or" describes only an association relationship between associated objects, and represents that three relationships may exist. For example, A and/or B may represent the following three cases: Only A exists, both A and B exist, and only B exists. In addition, in the descriptions of the embodiments of this application, "plurality" indicates two or more.

It should be understood that the terms "first", "second", and the like in the description, claims, and accompanying drawings of this application are used to distinguish between different objects, and are not used to describe a specific sequence. In addition, the terms "include", "have", and any variant thereof are intended to cover a non-exclusive inclusion. For example, a process, method, system, product, or device including a series of steps or units is not limited to the listed steps or units, but instead, optionally further include other steps or units not listed, or optionally further include other steps or units inherent to the process, method, product, or device.

An "embodiment" in this application means that specific features, structures, or characteristics described with reference to this embodiment may be included in at least one embodiment of this application. The phrase shown at various positions in the description may not necessarily refer to a same embodiment, nor an independent or optional embodiment exclusive from another embodiment. A person skilled in the art explicitly or implicitly understands that embodiments described in this application may be combined with other embodiments.

For ease of understanding, nouns involved in the embodiments of this application are first described below.
1. System application and third-party application: The system application refers to an application program that is used for implementing a specific function and that is directly provided by an operating system of an electronic device. The third-party application refers to an application program that is obtained by an electronic device through the Internet and that is provided by another developer for implementing a specific function. In the embodiments of this application, an application providing a user interface may be a system application, or may be a third-party application.
2. Hot zone: it is a touch area of a fixed shape and size on a screen.

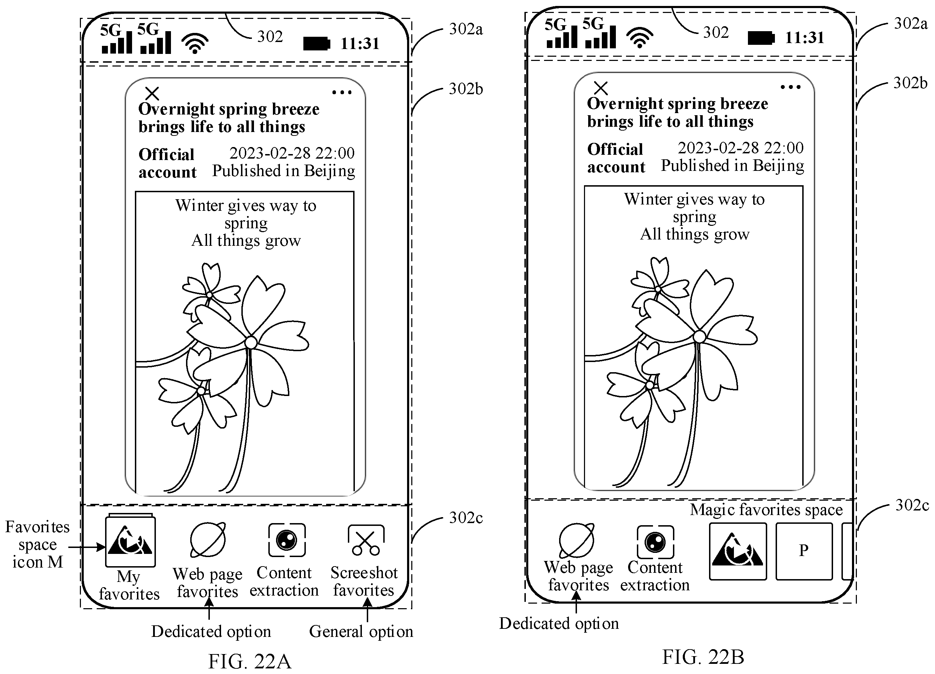

For example, 302d shown in FIG. 22B is a diagram of a "hot zone". Referring to FIG. 22B, the hot zone may include a right hot zone and/or a left hot zone. The right hot zone is a rectangular touch area extending from a right edge of the screen to the left side, and the left hot zone is a rectangular touch area extending from a left edge of the screen to the right side. FIG. 22B is exemplified by using the left hot zone as an example.

The electronic device may determine whether a control is close to the right side or the left side of the screen by determining a distance between a location of a current touch point of a finger on the screen and the right hot zone or the left hot zone. In the embodiments of this application, when it is identified that the current touch point is in the right hot zone or the left hot zone, the electronic device may determine to trigger a service corresponding to the hot zone, for example, may trigger material selection.

3. Material: it may include various types of information, such as text, a graphic, an image, a video, a file, audio, a web page, and a table, in this application. The image may be a static image or a dynamic image, and the file may be in any format such as a PDF format, a word format, or an excel format. This is not limited in this application.

4. Annotation (also referred to as a noodle): it refers to content drawn by a user on a display screen by using a stylus tip or a fingertip in this application. Information included in the content of the annotation may include a trajectory formed from a starting position to an ending position during drawing of the annotation, and the like. The starting position refers to a location where the user presses the stylus tip or fingertip down on the display screen to begin the annotation, and the ending position refers to a location where user lifts the stylus tip or fingertip from the display screen after completing the annotation.

The above is a brief introduction to the nouns involved in the embodiments of this application, and no further details will be given below.

An electronic device can support collection of different types of materials in different manners. In this way, a user can collect a material by using the electronic device.

However, during actual processing, a file management application in a mobile phone is taken as an example, the file management application can only be used for collecting materials such as an image, a video, audio, and a file. Types of the materials are limited, and collection manners (such as copying and dragging) are also correspondingly limited. A notes application in a mobile phone is taken as an example, in addition to text, images, videos, audio, and the like, the notes application may further collect web pages, videos, and the like obtained from a news application.

In the foregoing two examples, although the notes application can collect slightly more types of materials compared with the file management application, if a plurality of types of materials need to be collected into one note, a user needs to frequently switch between different applications in a collection process, leading to low favoriting efficiency for the user. In addition, the user further needs to favorite materials from different applications in different favoriting manners. For example, the user needs to favorite a web page or a video into the notes application in a three-finger swipe-down manner; and the user correspondingly needs to collect content of another type into the notes application in a plurality of manners such as copying, dragging, and knuckle C-shaped swiping.

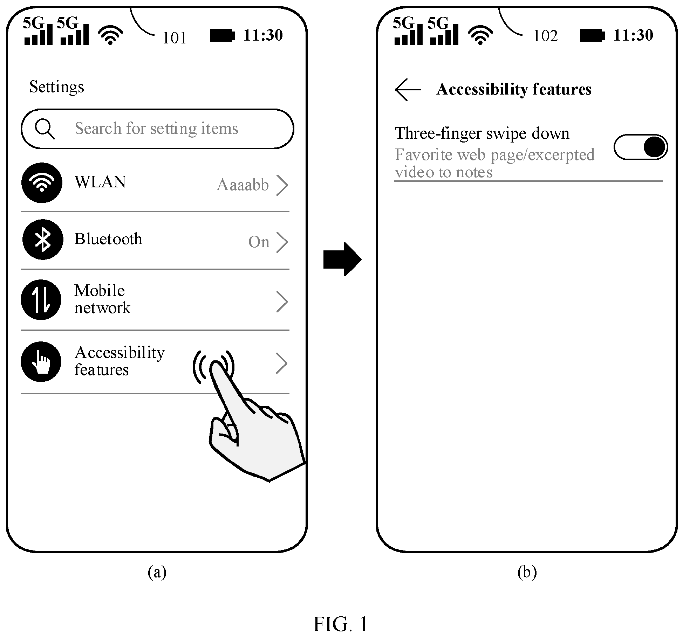

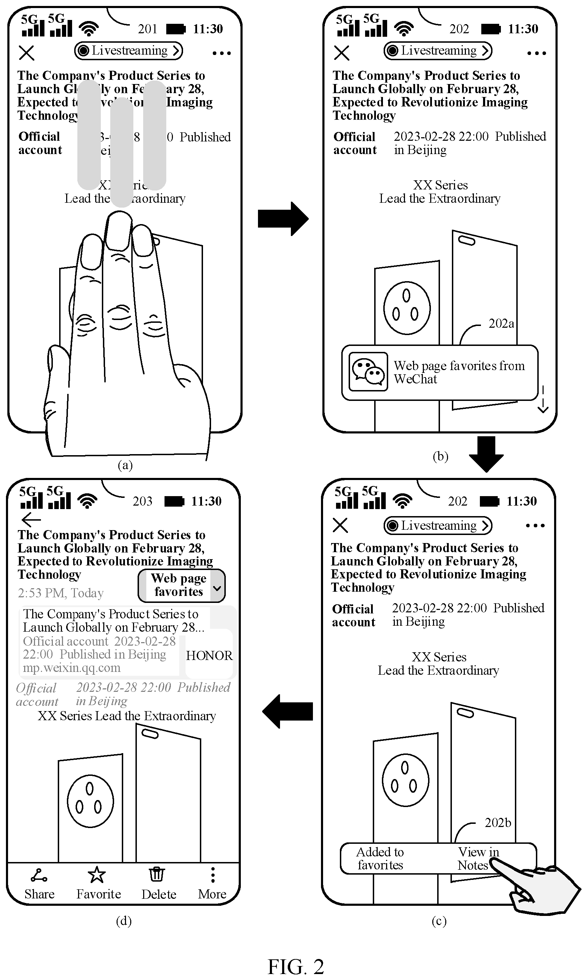

For example, FIG. 1 is a diagram of an interface corresponding to a favoriting manner according to an embodiment of this application; and FIG. 2 is a diagram of a group of user interfaces related to the favoriting manner. As shown in (a) in FIG. 1, a main interface 101 of a setting application of an electronic device may include an accessibility features option. In response to a user operation for the accessibility features option, the electronic device may display an accessibility features interface 102 shown in (b) in FIG. 1. The accessibility features interface 102 may include a three-finger swipe-down feature and a corresponding switch. Turning on the switch indicates enabling of the three-finger swipe-down feature, and turning off the switch indicates disabling of the three-finger swipe-down feature. In a case that the three-finger swipe-down feature is enabled, a user may collect a corresponding type of material (such as a web page and an excerpted video) into a notes application in a three-finger swipe-down favoriting manner.

For example, referring to a display interface 201 shown in (a) in FIG. 2, the display interface 201 is a display interface corresponding to a piece of web page content. When the electronic device detects a three-finger swipe-down operation performed by the user on the display interface 201, in response to the three-finger swipe-down operation, the electronic device may display a display interface 202 shown in (b) in FIG. 2. Compared with the display interface 201, other content of the display interface 202 remains unchanged, except that a card 202a is displayed in an overlaid manner in a lower half area of the display interface 202. The card 202a is used for prompting that the three-finger swipe-down operation triggers web page favoriting, and content of a favorited web page is from an application indicated by an icon, such as the WeChat APP. In the process of favoriting the web page into the notes application, the card 202a gradually moves to a lower frame of the electronic device and disappears. After the web page is successfully favorited, as shown in (c) in FIG. 2, the card 202a disappears, and a card 202b may be displayed on the display interface 202. The card 202b is used for prompting that the web page has been successfully favorited, and content of the web page is favorited in the notes application. Next, if the user performs a user operation on text "Notes" on the card 202b, in response to the user operation, the electronic device may display an interface of the notes application, for example, a display interface 203 shown in (d) in FIG. 2, to allow the user to view web page content that is currently favorited in the notes.

Based on the foregoing description, to shorten a favoriting path of a user, unify a favorites space, and improve favoriting efficiency, an embodiment of this application provides a new third-party application, that is, a global favorites application. Based on the global favorites application, a favoriting path can be shortened. However, at present, favoriting manners are diversified and not unified, and each favoriting manner corresponds to a different material type. For a system, a manner in which a user expects content retention cannot be accurately determined. For the user, it is not easy to remember, which affects user experience, and the like.

In view of this, the embodiments of this application provide a novel material processing method based on the global favorites application. The material processing method can implement favoriting of materials of different sources and materials of different types, unify a favoriting manner, expand favoriting scenarios and types, and improve favoriting efficiency. In this manner, a manner in which a user expects content retention can be accurately determined, and there is no learning cost for the user. In this way, a material can be efficiently and conveniently collected, organized, and distributed in any scenario, thereby improving user experience.

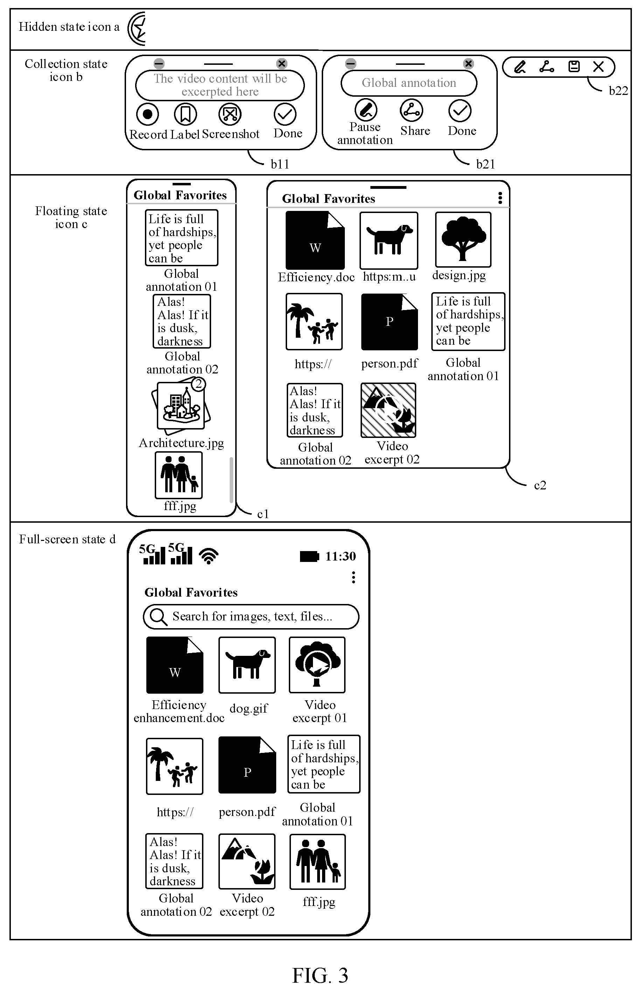

**For ease of understanding the method provided in the embodiments of this application, the following briefly describes a global favorites application and a plurality of forms of the global favorites application with reference to** **FIG. 3 to FIG. 5****.**

Global Favorites is a management application (APP) that may perform functions of collecting, organizing, and sharing materials and the like. That is, a user may meet requirements of material collection, material organization, and material sharing by using the global favorites application. Further, the global favorites application may be created into a personal learning space, working space, or the like. A data retention rule in Global Favorites may allow for permanent retention.

Global favorites may be presented in plurality of forms during use, to distinguish between different processing stages of an electronic device or different processing performed by the electronic device. For example, forms of Global Favorites may include a hidden state (also referred to as a hidden state icon), a collection state (also referred to as a collection state icon), a floating state (also referred to as a floating state icon), a full-screen state (also referred to as a full-screen state interface), and the like. Herein, only examples of names are provided. For example, the hidden state may alternatively be referred to as a minimized state, and the floating state may alternatively be referred to as a distribution state. This is not limited in this application. Each form of Global Favorites may further include one or more styles, and switching between the styles may be performed in response to user action. FIG. 3 is a diagram of Global Favorites in different forms according to an embodiment of this application.

A hidden state of Global Favorites indicates that Global Favorites has been invoked in a frontend or is running in a backend. The collection state indicates a location of a material collection entry or indicates that Global Favorites is in a material collection process. The floating state is used for presenting, in a partial area on a current display interface, a material that has been collected into Global Favorites. The full-screen state is used for presenting, in an entire display area, a material that has been collected into Global Favorites. It may be understood that the floating state is equivalent to a presentation window of the Global Favorite application, and the full-screen state is equivalent to a main interface of the global favorites application. The floating state and the full-screen state may support the user in organizing materials.

Optionally, a shape of the hidden state icon of Global Favorites may be a sphere or a hemisphere, and may be in a non-transparent or semi-transparent state. For example, when Global Favorites is in the hidden state, the hidden state icon may be presented in a semi-transparent or hemispherical effect that is attracted to an inner side of an edge of a screen, for example, a hidden state icon a shown in FIG. 3. In this case, when the hidden state icon a is located on the inner side of the edge of the screen, normal viewing of display content by a user is not affected. When the hidden state icon a is in the semi-transparent state, visual attention of the user is not attracted, and normal use of the user is not interfered.

It should be noted that the location on the inner side of the edge of the screen described in the embodiment of this application may be specifically located on an upper inner side, a lower inner side, a left inner side, or a right inner side of the edge. This is not limited in this application.

Optionally, switching between types of the collection state icon of Global Favorites may be performed based on different collection scenarios. For example, when an excerpted video is collected, a style of the collection state may be switched to a collection state icon b11 shown in FIG. 3. When a global annotation is collected, the style of the collection state may be switched to a collection state icon b21 or a collection state icon b22 shown in FIG. 3. The style of the collection state may be specifically set according to a type of a collected material. This is not limited in this application.

Optionally, the floating state of Global Favorites may be moved in the display area based on a drag operation of the user, or may be resized based on a drag operation of the user. For example, the floating state of Global Favorites may specifically include two styles. One is a long strip-shaped style, for example, a first floating state c1 shown in FIG. 3; and the other is a card-shaped style, for example, a second floating state c2 shown in FIG. 3; The first floating state c1 in the long strip-shaped style and the second floating state c2 in the card-shaped style correspond to different positions and sizes. The first floating state c1 of Global Favorites may be presented in an effect of being attracted to an inner side of an edge of a screen when displayed, to avoid interference with currently displayed content. The second floating state c2 of Global Favorites may be displayed in a central area of a display screen when displayed, to facilitate viewing by a user.

Optionally, in a possible implementation, in response to a drag operation for an edge of the first floating state c1, switching from the first floating state c1 to the second floating state c2 may be implemented. On the contrary, in response to a drag operation for an edge of the second floating state c2, switching from the second floating state c2 to the first floating state c1 may be implemented. In another possible implementation, in response to a two-finger reverse swipe operation for the first floating state c1, switching from the first floating state c1 to the second floating state c2 may be implemented. On the contrary, in response to a two-finger pinch operation for the second floating state c2, switching from the second floating state c2 to the first floating state c1 may be implemented. In addition, in the first floating state c1, one or two columns of icons corresponding to materials may be displayed, and an icon corresponding to one material may be displayed at the minimum. In the second floating state c2, two or more columns of icons corresponding to materials may be displayed, but a number of columns and a number of rows are less than those in the full-screen state, and may be specifically set as needed. This is not limited in this application.

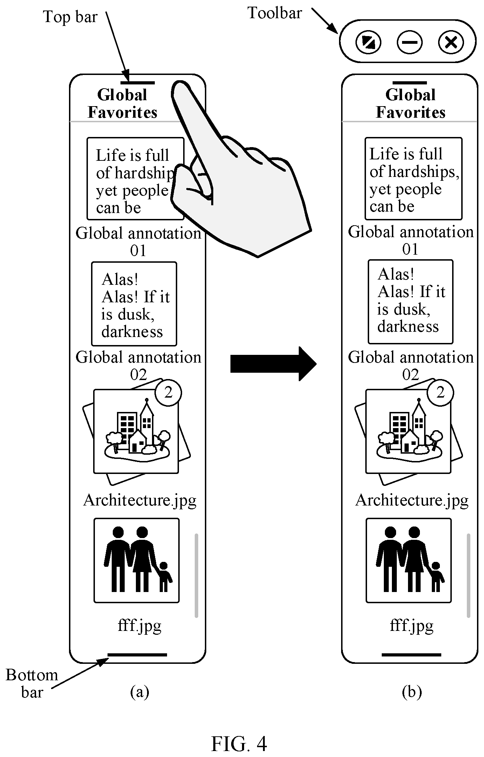

Optionally, the floating state of Global Favorites may further include a top bar control, and/or a bottom bar control. In response to a tap operation for the top bar control, as shown in (a) in FIG. 4, switching from the first floating state c1 to a floating state style with a toolbar as shown in (b) in FIG. 4 may be implemented. The toolbar of the style may include three controls, which are a zoom-in control, a zoom-out control, and a close control, respectively. The zoom-in control is used for triggering switching from the first floating state c1 to the full-screen state. The zoom-out control is used for triggering switching from the first floating state c1 to the hidden state icon a. The close control is used for triggering disabling of Global Favorites.

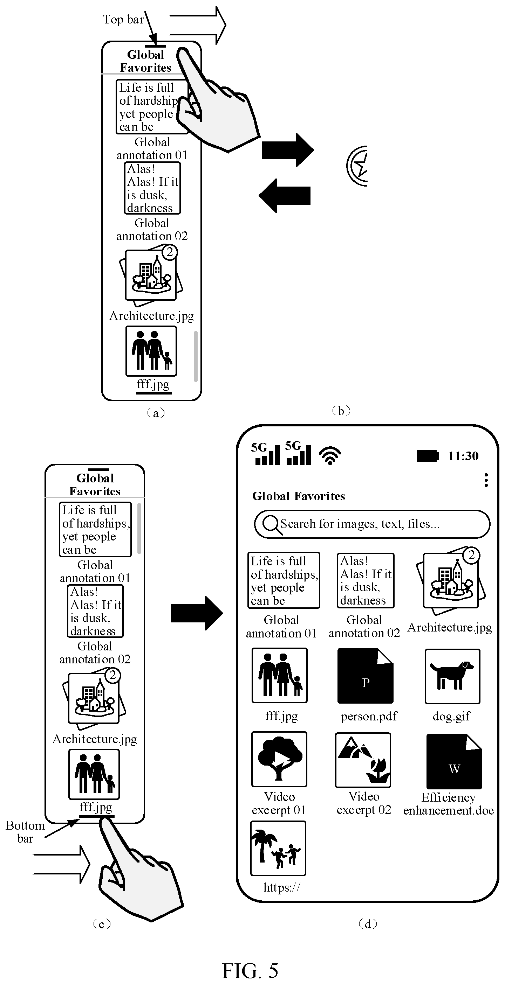

Optionally, as shown in (a) in FIG. 5 and (b) in FIG. 5, in response to a swipe operation for the top bar control of the first floating state c1, Global Favorites may switch from the first floating state c1 to the hidden state icon a. The swipe operation may be performed leftwards or rightwards, and (a) in FIG. 5 only shows swiping rightwards. In addition, in response to a tap operation for the hidden state a, Global Favorites may switch from the hidden state icon a to the first floating state c1.

Optionally, as shown in (c) in FIG. 5 and (d) in FIG. 5, in response to a swipe operation for a bottom bar control of the first floating state c1, Global Favorites may switch from the first floating state c1 to a full-screen state icon d. The swipe operation may be performed leftwards or rightwards, and (c) in FIG. 5 only shows swiping rightwards.

Similarly, switching from the second floating state c2 to a floating state style with a toolbar may also be implemented. The second floating state c2 may also include a top bar control and a bottom bar control. A swipe operation may also be performed for the top bar control or the bottom bar control of the second floating state c2, to correspondingly switch to the hidden state icon a or the full-screen state d. For descriptions of functions of the second floating state c2, refer to the foregoing descriptions. Details are not described herein again.

It should be further noted that in a process of using Global Favorite by a user, switching between a plurality of forms may be implemented, but the global favorites application in each form is located at a topmost layer (or referred to as pinned to top) of a plurality of display layers on a display interface, and is not covered and affected by content displayed below.

**With reference to the foregoing description of Global Favorites and the plurality of forms during use, when the material processing method provided in this application is implemented, the electronic device may execute one or more of the following scenarios.**

It may be understood that the material includes a plurality of types. The plurality of types of materials mentioned herein may include a fragmented material such as a text, a graphic, an image, a table, or an annotation, and may further include a non-fragmented material such as a web page, a video, or a file. The graphic may indicate a local image captured by using a lasso tool, and the like.

It should be understood that the material involved in this application includes, but is not limited to, text, a graphic, an image, a video, audio, a web page, a table, an annotation, and the like. Material collection involved in this application may include obtaining a material, processing the obtained material, and using a result obtained by the processing as collected content. For example, material collection may include: converting an obtained web page material into a text material, converting an obtained text material into an image material, editing or labeling inputted text or image, or the like.

### First Part

For the various types of materials described above, to unify a favoriting manner, this application provides a unified gesture, for example, a three-finger swipe-down manner. Therefore, in this application, a global favorites mode may be triggered in the three-finger swipe-down manner. For example:
Scenario 1: In response to a three-finger swipe-down operation, a global favorites mode is enabled, and an electronic device can support saving a web page to a global favorites application.
Scenario 2: In response to a three-finger swipe-down operation, a global favorites mode is enabled, and an electronic device can support video recording while playing a video, and save the recorded video to a global favorites application. For ease of description, in this application, the recorded video is recorded as an excerpted video.

Optionally, in the video recording process, the electronic device can support continuous recording. The continuous recording herein may indicate restarting to record a segment of video after recording is paused. It should be noted that, after recording is paused and before recording is restarted, the electronic device can support switching between applications. That is, two segments of recorded content may relate to different applications. However, after recording is completed, the two segments of recorded content are spliced into one excerpted video (also referred to as one video clip) and collected into Global Favorites.

Optionally, after video recording is completed, for the excerpted video that has been collected into Global Favorites, the electronic device can further support appending excerpts. It should be noted that the appending of excerpts herein may indicate non-continuous recording or segmented recording sessions. Each newly appended video and videos previously recorded during a plurality of sessions are equivalently saved in a same folder position in Global Favorites. In the folder, videos recorded during different sessions correspond to different video clips. It should be further noted that the folder including the plurality of video clips is still displayed as one individual material icon in Global Favorites.

Scenario 3: In response to a three-finger swipe-down operation, a global favorites mode is enabled, and an electronic device can support saving a document to a global favorites application.

Scenario 4: In response to a three-finger swipe-down operation, a global favorite mode is enabled, and an electronic device can support saving an image to a global favorites application.

Scenario 5: In response to a three-finger swipe-down operation, a global favorites mode is enabled, and an electronic device can support saving screenshot content to a global favorites application.

Scenario 6: In response to a three-finger swipe-down operation, a global favorites mode is enabled, and an electronic device can support saving long screenshot content to a global favorites application.

Scenario 7: In response to a three-finger swipe-down operation, a global favorites mode is enabled, and an electronic device can support saving content identified from a display interface to a global favorites application.

Scenario 8: In response to a three-finger swipe-down operation, a global favorites mode is enabled, and an electronic device can further support adding annotations on any interface, and save the original interface and an annotation mark to a global favorites application together. For ease of description, in this application, the original interface and the annotation mark are recorded as a global annotation.

Optionally, in the annotation process, the electronic device can support continuous annotation. The continuous annotation herein may indicate restarting annotation after the annotation is paused. It should be noted that, after the annotation is paused and before the annotation is restarted, the electronic device can support switching between interfaces or applications. That is, the two segments of annotation content may relate to different display content of different interfaces or different applications. However, after the annotation is completed, the two segments of annotated content are spliced into one global annotation (which may alternatively referred to as one snapshot) and collected into Global Favorites.

Optionally, after the annotation is completed, for the global annotation that has been collected into Global Favorites, the electronic device can further support appending annotations. It should be noted that the appending of annotations herein may refer to non-continuous annotation or segmented annotation sessions. Content of each newly appended annotation and content of one or more previous annotations are equivalently saved in a same folder position in Global Favorites. In the folder, content of different annotations corresponds to different snapshots. It should be further noted that the folder including the plurality of snapshots is still displayed as one individual material icon in Global Favorites.

Optionally, after the annotation is completed, for the global annotation that has been collected into Global Favorites, the electronic device can further support repeated annotation, that is, re-edit annotation content that has carried an annotation mark, which includes, but is not limited to, adding an annotation mark.

The above merely shows eight collection scenarios as examples, and certainly other scenarios may exist. A scenario in a collection stage is not limited in this application. According to the collection method provided in this application, in combination with the global favorites application, materials of different sources and materials of different types can be favorited, favoriting manners are unified, favoriting scenarios are expanded, and favoriting efficiency are enhanced. In this manner, a manner in which a user expects content retention can be accurately determined, and there is no learning cost for the user. This can help the user efficiently collect materials in any scenario.

It may be understood that the electronic device in this application may be a terminal device such as a mobile phone or a tablet computer, or may be a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, or a smart home device and/or a smart city device. A specific type of the electronic device is not specifically limited in the embodiments of this application.

**The following describes in detail processes of enabling a global favorites mode by using a unified three-finger swipe-down gesture and collecting different types of materials.**

### Embodiment 1: Web page favoriting (as shown in FIG. 6, FIG. 7, and FIG. 8A, FIG. 8B, FIG. 8C, FIG. 8D, FIG. 8E, and FIG. 8F)

WeChat is taken as an example. An electronic device can detect a three-finger swipe-down operation for a display interface corresponding to an article. In response to the three-finger swipe-down operation, the electronic device may trigger and enable a global favorites mode, and favorite display content in the global favorites mode.

A display interface 301 shown in (a) in FIG. 6 is a display interface corresponding to a web page. As shown in (a) in FIG. 6, the electronic device can detect a three-finger swipe-down operation for the display interface 301. In response to the three-finger swipe-down operation, the electronic device can enable a global favorites mode, and display a display interface 302 shown in (b) in FIG. 6.

Compared with the display interface 301, the display interface 302 includes three areas. A first part 302a located in the top area is a status bar, and is used for displaying basic status information of the electronic device, for example, information such as a network, an electric quantity, and time. A second part 302b located in the middle area may include a thumbnail. The thumbnail represents the display interface 301, which is correspondingly displayed by the electronic device when the three-finger swipe-down gesture is performed. Content included in the thumbnail is the same as content of the display interface 301, and a size of the thumbnail is less than a size of the display interface 301. A third part 302c located in the bottom area is used for displaying a plurality of operation options. Types of the operation options may include a dedicated option (which may alternatively be referred to as a vertical category option), a content extraction option, a general option, and the like.

Optionally, in a possible implementation, the thumbnail may be displayed in a rectangular shape (as shown in (b) in FIG. 6), a top-wide bottom-narrow shape, a left-wide right-narrow shape, or the like. The specific display form may be set as needed. This is not limited in the embodiments of this application.

Optionally, in another possible implementation, during switching from the display interface 301 to the display interface 302, a "door opening animation" may be displayed. The door opening animation indicates a process in which display content is gradually reduced or transformed from a form of full-screen display (that is, the display interface 301) to a form of a thumbnail. An opposite process may be referred to as a "door closing animation". The specific animation may be set as needed. This is not limited in the embodiments of this application.

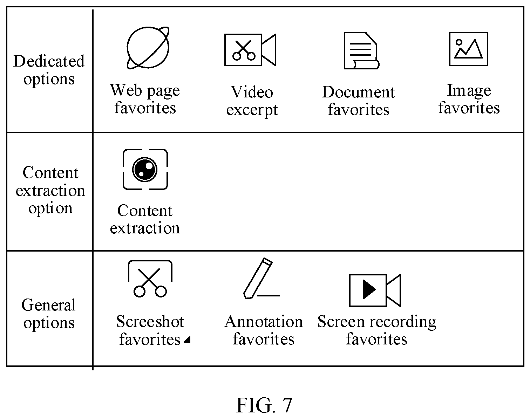

The dedicated option indicates an option corresponding to a content storage format triggered by the three-finger swipe-down gesture. When the three-finger swipe-down gesture is performed in different scenarios, dedicated options displayed in the third part are different. In other words, Global Favorites can provide a corresponding option for a specific scenario. FIG. 7 is a diagram of a plurality of operation options according to an embodiment of this application; As shown in FIG. 7, for a web page favoriting scenario, the dedicated option may be correspondingly displayed as a web page favorites option. For a video excerpt scenario, the dedicated option may be correspondingly displayed as a video excerpt option. For a document favoriting scenario, the dedicated option may be correspondingly displayed as a document favorites option. For an image favoriting scenario, the dedicated option may be correspondingly displayed as an image favorites option, or the like. The scenario and the dedicated option corresponding to the scenario may be set as needed. This is not limited in the embodiments of this application.

The content extraction option refers to an option for extracting local content from a display interface based on a system screen identification capability. The system screen identification capability indicates functions of the electronic device, including text extraction, commodity identification, similar image identification, and the like.

The general option is an option of a plurality of special functions, and the general option may perform a same operation on different types of display content. As shown in FIG. 7, the general option may include a screenshot favorites option, a long screenshot favorites option, an annotation favorites option, a screen recording favorites option, and the like. This is not limited in the embodiments of this application.

Optionally, in a possible implementation, in the third part, typically, less than or equal to three options are provided in each scenario, or one option is selected from each of the foregoing three types of options, to form a combination of the three options for display. Optionally, in another possible implementation, in the third part, the dedicated option may provide one option, the content extraction option may provide one option, and the general option may provide two options.

Optionally, during displaying, the dedicated option, the content extraction option, and the general option may be displayed from left to right.

For example, in a web page favoriting scenario, when a web page favorites option cannot be provided, a content extraction option, a screenshot favorites option, a long screenshot favorites option, an annotation favorites option, and the like may be displayed in the third part.

For example, for a video excerpting scenario, when a video excepting option cannot be provided, screen recording favorites, a content extraction option, a screenshot favorites option, an annotation favorites option, and the like may be displayed in the third part.

For example, in a document favoriting scenario, when document favorites cannot be provided, a content extraction option, a screenshot favorites option, a long screenshot favorites option, an annotation favorites option, and the like may be displayed in the third part.

It should be noted that the corresponding dedicated options cannot provided in the foregoing three scenarios, which means that some niche third-party applications are not allowed to use or are not adapted to a dedicated favoriting function of a system. In this case, when triggered by the three-finger swipe-down gesture, the display interface 302 may selectively skip displaying the dedicated options.

For example, in a scenario where no dedicated option can be provided, such as a WeChat chat, a shopping scenario, or a book reading scenario, a content extraction option, a screenshot favorites option, a long screenshot favorites option, an annotation favorites option, and the like may be displayed in the third part.

Display status of options in the third part may be set as needed. This is not limited in this application.

It should be noted that the display interface 302 shown in (b) in FIG. 6 is merely a display interface style provided in this embodiment of this application. This application further provides a plurality of display interface styles, which are described subsequently and are not described herein again.

Embodiment 1 to Embodiment 7 are described by using an example in which a global favorites mode is triggered and enabled in a three-finger swipe-down manner, and a style of a triggered display interface is shown in (b) in FIG. 6.

Referring to a display interface 302 shown FIG. 8A, an electronic device can detect a tap operation for a web page favorites option on the display interface 302. In response to the tap operation, display content (that is, a web page displayed on the display interface 301) corresponding to the thumbnail is collected into a global favorites application. In this collection process, as shown in FIG. 8B, the electronic device may first display a door closing animation, to switch from the display interface 302 to an interface originally displaying a web page, and display a card 303a on the interface. The card 303a may include information, such as a title, a publisher, a publishing address, and time, of a web page that is being collected. Optionally, a close button may be further included at an upper left corner of the card 303a. In response to a tap operation for the close button, favoriting of the web page can be terminated. Then, the card 303a disappears and is not displayed.

In the web page collection process, if a tap operation for the close button at the upper left corner of the card 303a is not received within preset duration, as shown in FIG. 8C, switching from the card 303a to display a card 303b can be implemented, and other content remains unchanged. The card 303b is used for prompting a source of web page favorites, for example, from WeChat, and displaying an icon of WeChat. Optionally, as shown in FIG. 8D, the card 303b may move toward a bottom edge of the display interface 303, and gradually disappear.

Optionally, after the card 303b disappears, as shown in FIG. 8E, the electronic device may further display a card 303c, and other content remains unchanged. The card 303c is used for indicating that the web page has been successfully favorited, and providing a link for accessing the global favorites application.

In this embodiment of this application, Global Favorites is a default favoriting manner of web page favoriting. Certainly, web page content may alternatively be favorited in another application. This may be specifically set as needed and is not limited in the embodiments of this application.

For example, a text link, such as "View in Global Favorites", may be displayed on the card 303c. In response to a tap operation for the text link, the electronic device may display a floating state icon c1 of Global Favorites, as shown in FIG. 8F. The floating state icon c1 of Global Favorites includes an icon indicating web page content collected just now.

Optionally, when no operation is received within the preset duration, the card 303c may automatically disappear and not be displayed.

Optionally, after the card 303b disappears, as shown in FIG. 8E, a hemispherical hidden state icon a of Global Favorites may further be displayed on an inner side of a right edge of a screen of the electronic device, to provide an entry of the global favorites application. Optionally, when display of the hidden state icon a is triggered for the first time, the electronic device may further display a prompt card near the hidden state icon a. The prompt card is used for prompting that the user can access the global favorites application by tapping the hidden state icon a, to view content collected into the global favorites application, as shown in FIG. 8F. The prompt card may also include a close button. In response to a tap operation of the user for the close button, closure of the prompt card can be triggered.

The above is merely an example of web page favoriting.

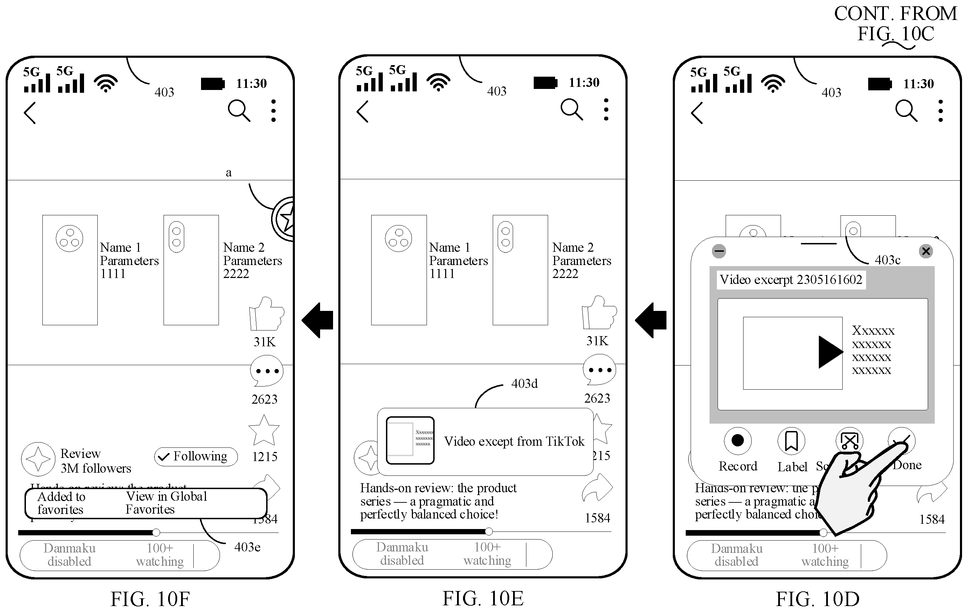

### Embodiment 2: Excerpted video favoriting (as shown in FIG. 9, and FIG. 10A, FIG. 10B, FIG. 10C, FIG. 10D, FIG. 10E, and FIG. 10F)

A video application is taken as an example. An electronic device can detect a three-finger swipe-down operation for a video playback interface. In response to the three-finger swipe-down operation, the electronic device may trigger and enable a global favorites mode, and favorite excerpted content of a video in the global favorites mode.

A display interface 401 shown in (a) in FIG. 9 is a display interface corresponding to a video playback interface. As shown in (a) in FIG. 9, the electronic device detects a three-finger swipe-down operation for the display interface 401. In response to the three-finger swipe-down operation, the electronic device can enable a global favorites mode, and display a display interface 402 shown in (b) in FIG. 9.

Optionally, during switching from the display interface 401 to the display interface 402, a "door opening animation" may be displayed.

Compared with the display interface 401, the display interface 402, like the display interface 302 in Embodiment 1, may include three parts. A first part 402a located in the top area is a status bar. Details are not described herein again. A second part 402b located in the middle area includes a thumbnail. The thumbnail represents the display interface 401, which is correspondingly displayed by the electronic device when the three-finger swipe-down gesture is performed. Content included in the thumbnail is the same as content of the display interface 401, and a size of the thumbnail is less than a size of the display interface 401. A third part 402c located in the bottom area is used for displaying a plurality of operation options. For specific introduction of the operation options, refer to the introduction in Embodiment 1. Details are not described herein again.

In addition, because the display interface 401 corresponds to a video excerpting scenario, a dedicated option displayed in the third part is a video excerpt option. A content extraction option, a screenshot favorites option and an annotation favorites option in general options, and the like may be further displayed in the third area.

It should be noted that the display interface 402 shown in (b) in FIG. 9 is merely a display interface style provided in this embodiment of this application. This application further provides a plurality of display interface styles, which are described subsequently and are not described herein again.

Referring to the display interface 402 shown in FIG. 10A, the electronic device can detect a tap operation for a video excerpt option on the display interface 402. In response to the tap operation, as a display interface 403 shown in FIG. 10B, the electronic device may enable a video excerpting mode, and implement a plurality of functions of video recording, labeling, screenshot, saving, and the like in the video excerpting mode.

Compared with the display interface 401, the display interface 403 still includes a video playback interface. A difference lies in that the display interface 403 further includes a first collection state 403a. It should be noted that the first collection state 403a is a style of a collection state corresponding to the global favorites application in a video excerpting scenario, as a collection state icon b11 shown in FIG. 3. The first collection state 403a may include a video content area, a record control, a label control, a screenshot control, and a done control. When a video is not excerpted, text "The video content will be excerpted here" may be displayed in the video content area, to prompt the user of a display position of excerpted content, during video excepting, text "Recording" may be displayed to prompt the user that the content is being recorded, and when recording is paused, the excerpted content may be automatically saved in the video content area and displayed. The record control may be used for enabling video recording, switching from the record control to a pause control may be implemented, and the pause control may be used for pausing video recording. The label control may be used for labeling a video frame corresponding to a particular time point during video recording. A label may also be referred to as a time label. The screenshot control may be used for capturing a video frame. The done control may be used for disabling the video excerpting mode and triggering favoriting of the excerpted video that has been saved to the video content area.

Optionally, during switching from the display interface 402 to the display interface 403, a door closing animation may be displayed.

It may be understood that the user may drag the first collection state 403a to change a position of the first collection state 403a. The electronic device can detect a drag operation for the first collection state 403a. In response to the drag operation, the electronic device may move the first collection state 403a.

Optionally, the display interface 502 may further display a prompt card at a position close to the bottom of a screen. Text "Already enable the video excerpting mode" may be displayed on the prompt card, and is used for prompting the user that the electronic device currently enables the video excerpting mode, and operations related to video excerpting may be performed. Subsequently, after staying for preset duration or in response to an operation for a control in the first collection state 403a, the prompt card may disappear and not be displayed.

Referring to FIG. 10B and FIG. 10C, when the electronic device detects a tap operation for a record control included in a first collection state 403a, in response to the tap operation, switching from the first collection state 403a to a form 403b for display may be implemented, and the electronic device may start recording a video played on the display interface 403. Compared with the first collection state 403a, in the form 403b, switching from the record control to the pause control is implemented, switching from the name "Record" of the record control to recording duration timed from "00:00" is implemented, and other content remains unchanged. Optionally, text displayed in a video content area of the form 403b may further be changed to "Recording", to prompt the user that recording has been started. With the playback and correspondingly recording of the video, it is assumed that after 18 seconds of recording, the electronic device detects a tap operation for the pause control, and terminates recording in response to the tap operation. Video content correspondingly excerpted within the 18 seconds may be temporarily saved in a video content area of a form 403c.

After the excerpted content is temporarily saved, the electronic device may switch from the form 403b to the form 403c, as shown in FIG. 10D. Compared with the form 403b, in the form 403c, the video content area may include a name (which may be formed by text "video excerpt" and recording duration by default) of the excerpted video, and a last frame of video image in the recorded video clip. A playback control may further be displayed in an overlaid manner on a last frame of video image in the first recorded clip. The play control may trigger playback of the temporarily saved excerpted video clip in the video content area. In addition, compared with the form 403c, in a form 5028, switching from the pause control to the record control is implemented, switching from the recording duration back to the name "Record" of the record control is also implemented, and other controls remain unchanged.

It may be understood that based on a display interface 403 shown in FIG. 10D, a plurality of recordings or continuous recordings may further be performed subsequently. The recording process is similar to the above, and details are not described herein again.

After the foregoing excerpting is terminated, based on the form 403c, the electronic device can detect a tap operation for a done control in the form 403c. In response to the tap operation, video excerpting is completed, and the excerpted content temporarily saved in the video content area may be collected into the global favorites application. In this favoriting process, as shown in FIG. 10E, the form 403c may switch to a card 403d, and other content remains unchanged. The card 403d is used for prompting a source of the video excerpting, for example, from TikTok, and displaying an icon of TikTok. Optionally, the card 403d may be move toward the bottom edge of the display interface 403, and gradually disappear.

Optionally, after the card 403d disappears, as shown in FIG. 10F, the electronic device may display a card 403e, and other content remains unchanged. The card 403e is used for indicating that the video excerpted by the user has been successfully favorited, and providing a link for accessing the global favorites application, to prompt the user that the user can view the collected material in the global favorites application.

In this embodiment of this application, Global Favorites is a default favoriting manner of an excerpted video. Certainly, the excerpted video may alternatively be favorited in another application. This may be specifically set as needed and is not limited in the embodiments of this application.

For example, a text link, such as "View in Global Favorites", may be displayed on the card 403e. In response to a tap operation for the text link, the electronic device may display a floating state icon c1 of Global Favorites. The floating state icon c1 of Global Favorites includes an icon indicating video extract content collected just now.

Optionally, after the card 403d disappears, as shown in FIG. 10F, a hemispherical hidden state icon a of Global Favorites may further be displayed on an inner side of a right edge of the screen of the electronic device, to provide an entry of the global favorites application. Optionally, when display of the hidden state icon a is triggered for the first time, the electronic device may further display a prompt card near the hidden state icon a. The prompt card is used for prompting that the user can access the global favorites application by tapping the hidden state icon a, to view content collected into the global favorites application. The prompt card may also include a close button. In response to a tap operation of the user for the close button, closure of the prompt card can be triggered.

Optionally, when no operation is received within preset duration, the card 403e may automatically disappear and not be displayed.

Optionally, after the foregoing excerpted video is successfully favorited, the global favorites application may continue to be displayed in the hidden state icon a on an interface of the global favorites application, to indicate to the user that the global favorites application is still running, and the user can collect any material into Global Favorites at any time.

The above is merely an example of excerpted video favoriting.

### Embodiment 3: Document favoriting (as shown in FIG. 11, and FIG. 12A, FIG. 12B, FIG. 12C, FIG. 12D, and FIG. 12E)

WeChat is taken as an example. An electronic device may display a chat interface of WeChat. The chat interface may include file thumbnails respectively corresponding to a plurality of files currently received by the electronic device. The thumbnails of the plurality of files may be used for triggering the electronic device to display specific content of the files. For example, the electronic device may detect a tap operation for a file thumbnail corresponding to a file "What are the customs of the Minor Snow solar term". In response to the tap operation, the electronic device displays a preview interface corresponding to the corresponding file. The electronic device may detect a three-finger swipe-down operation for the preview interface. In response to the three-finger swipe-down operation, the electronic device may trigger and enable a global favorites mode, and favorite a document in the global favorites mode.

A display interface 501 shown in (a) in FIG. 11 is a display interface corresponding to the foregoing file. As shown in (a) in FIG. 11, the electronic device can detect a three-finger swipe-down operation for the display interface 501. In response to the three-finger swipe-down operation, the electronic device can enable a global favorites mode, and display a display interface 502 shown in (b) in FIG. 11.

Optionally, during switching from the display interface 501 to the display interface 502, a "door opening animation" may be displayed.

Compared with the display interface 501, the display interface 502, like the display interface 302 in Embodiment 1, may include three parts. A first part 502a located in the top area is a status bar. Refer to the descriptions in Embodiment 1. Details are not described herein again. A second part 502b located in the middle area includes a thumbnail. The thumbnail represents the display interface 501, which is correspondingly displayed by the electronic device when the three-finger swipe-down gesture is performed. Content included in the thumbnail is the same as content of the display interface 501, and a size of the thumbnail is less than a size of the display interface 501. A third part 502c located in the bottom area is used for displaying a plurality of operation options. For specific introduction of the operation options, refer to the introduction in Embodiment 1. Details are not described herein again.

In addition, because the display interface 501 corresponds to a document favoriting scenario, a dedicated option displayed in the third part is a document favorites option. A content extraction option, a screenshot favorites option and an annotation option in general options, and the like may be further displayed in the third part.

It should be noted that the display interface 502 shown in (b) in FIG. 11 is merely a display interface style provided in this embodiment of this application. This application further provides a plurality of display interface styles, which are described subsequently and are not described herein again.

Referring to a display interface 502 shown in FIG. 12A, the electronic device can detect a tap operation for a document favorites option in the display interface 502. In response to the tap operation, display content (that is, a document displayed on a preview interface) corresponding to the thumbnail is collected into the global favorites application. In this favoriting process, as shown in FIG. 12B, the electronic device may first display a door closing animation, to switch from the display interface 502 to the preview interface originally displaying the file, and display a card 503a on the interface. The card 503a may include information, such as a title, of the file that is being collected. Optionally, a close button may be further included at an upper left corner of the card 503a. In response to a tap operation for the close button, the electronic device can terminate favoriting of the document, and then, the card 503a disappears and is not displayed.

In the document collection process, if a tap operation for the close button at the upper left corner of the card 503a is not received within preset duration, as shown in FIG. 12C, switching from the card 503a to display a card 503b may be implemented, and other content remains unchanged. The card 503b is used for prompting a type, a size, and the like of the favorited document. Optionally, the card 503b may include an icon corresponding to the document. Optionally, as shown in FIG. 12D, the card 503b may further move toward a bottom edge of the display interface 503, and gradually disappear.

Optionally, after the card 503b disappears, as shown in FIG. 12E, the electronic device may further display a card 503c, and other content remains unchanged. The card 503c is used for indicating that the document has been successfully favorited, and providing a link for accessing the global favorites application, to prompt that the user can view the collected material in the global favorites application.

In this embodiment of this application, Global Favorites is a default favoriting manner of a document. Certainly, the document may alternatively be favorited in another application. This may be specifically set as needed and is not limited in the embodiments of this application.

For example, a text link, such as "View in Global Favorites" may be displayed on the card 503c. In response to a tap operation for the text link, the electronic device may display a floating state icon c1 of Global Favorites. The floating state icon c1 of Global Favorites includes an icon indicating a document collected just now.

Optionally, when no operation is received within preset duration, the card 503c may automatically disappear and not be displayed.

Optionally, after the card 503b disappears, as shown in FIG. 12E, the electronic device may further display a prompt card near a hidden state icon a. The prompt card is used for prompting that the user can access the global favorites application by tapping the hidden state icon a, to view content collected into the global favorites application. The prompt card may also include a close button. In response to a tap operation of the user for the close button, closure of the prompt card can be triggered.

The above is merely an example of document favoriting.

### Embodiment 4: Image favoriting (as shown in FIG. 13, and FIG. 14A, FIG. 14B, FIG. 14C, FIG. 14D, and FIG. 14E)

A gallery application is taken as an example. An electronic device can detect a tap operation for the gallery application. In response to the tap operation, the electronic device can enable the gallery application, and display a main interface (that is, an interface displayed by default after enabling) of the gallery application. The main interface of the gallery application may include thumbnails of several images. The electronic device can detect a tap operation for any thumbnail. In response to the tap operation, the electronic device can display an image corresponding to the thumbnail in a full-screen display mode.

A display interface 601 shown in (a) in FIG. 13 is a display interface corresponding to the foregoing image. As shown in (a) in FIG. 13, the electronic device can detect a three-finger swipe-down operation for the display interface 601. In response to the three-finger swipe-down operation, the electronic device can enable a global favorites mode, and display a display interface 602 shown in (b) in FIG. 13.

Optionally, during switching from the display interface 601 to the display interface 602, a "door opening animation" may be displayed.

Compared with the display interface 601, the display interface 602, like the display interface 602 in Embodiment 1, may include three parts. A first part 602a located in the top area is a status bar. Refer to the descriptions in Embodiment 1. Details are not described herein again. A second part 602b located in the middle area includes a thumbnail. The thumbnail represents the display interface 601, which is correspondingly displayed by the electronic device when the three-finger swipe-down gesture is performed. Content included in the thumbnail is the same as content of the display interface 601, and a size of the thumbnail is less than a size of the display interface 601. A third part 602c located in the bottom area is used for displaying a plurality of operation options. For specific introduction of the operation options, refer to the introduction in Embodiment 1. Details are not described herein again.

In addition, because the display interface 601 corresponds to an image favoriting scenario, a dedicated option displayed in the third part is an image favorites option. A content extraction option, a screenshot favorites option and an annotation option in general options, and the like may further be displayed in the third part.

It should be noted that the display interface 602 shown in (b) in FIG. 13 is merely a display interface style provided in this embodiment of this application. This application further provides a plurality of display interface styles, which are described subsequently and are not described herein again.

Referring to a display interface 502 shown in FIG. 14A, the electronic device can detect a tap operation for an image favorites option on a display interface 602. In response to the tap operation, display content (that is, a displayed image) corresponding to the thumbnail is collected into the global favorites application. In this collection process, as shown in FIG. 14B, the electronic device may first display a door closing animation, to switch from the display interface 602 to an interface originally displaying an image, and display a card 603a on the interface. The card 603a may include a thumbnail of an image that is being collected. Optionally, a close button may be further included at an upper left corner of the card 603a. In response to a tap operation for the close button, the electronic device can terminate favoriting of the document, and then, the card 603a disappears and is not displayed.

In the image favoriting process, if a tap operation for the close button at the upper left corner of the card 603a is not received within preset duration, as shown in FIG. 14C and FIG. 14D, the card 603b may further move toward the bottom edge of the display interface 603, and gradually disappear.

Optionally, after the card 603a disappears, as shown in FIG. 14E, the electronic device may further display a card 603b, and other content remains unchanged. The card 603b is used for indicating that the image has been successfully favorited, and providing a link for accessing the global favorites application, to prompt that the user can view the collected material in the global favorites application.

In this embodiment of this application, Global Favorites is a default favoriting manner of an image. Certainly, the image may alternatively be favorited in another application. This may be specifically set as needed and is not limited in the embodiments of this application.

For example, a text link, such as "View in Global Favorites", may be displayed on the card 603b. In response to a tap operation for the text link, the electronic device may display a floating state icon c1 of Global Favorites. The floating state icon c1 of Global Favorites includes an icon indicating a document collected just now.

Optionally, when no operation is received within preset duration, the card 603b may automatically disappear and not be displayed.

Optionally, after the card 603a disappears, as shown in FIG. 14E, the electronic device may further display a prompt card near a hidden state icon a. The prompt card is used for prompting that the user can access the global favorites application by tapping the hidden state icon a, to view content collected into the global favorites application. The prompt card may also include a close button. In response to a tap operation of the user for the close button, closure of the prompt card can be triggered.

The above is merely an example of image favoriting.

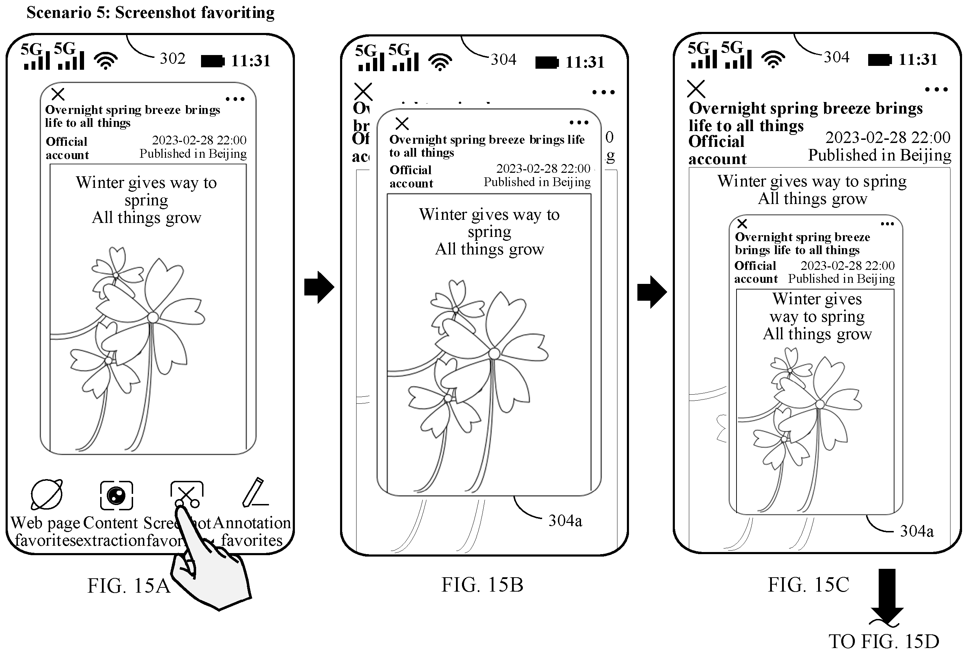

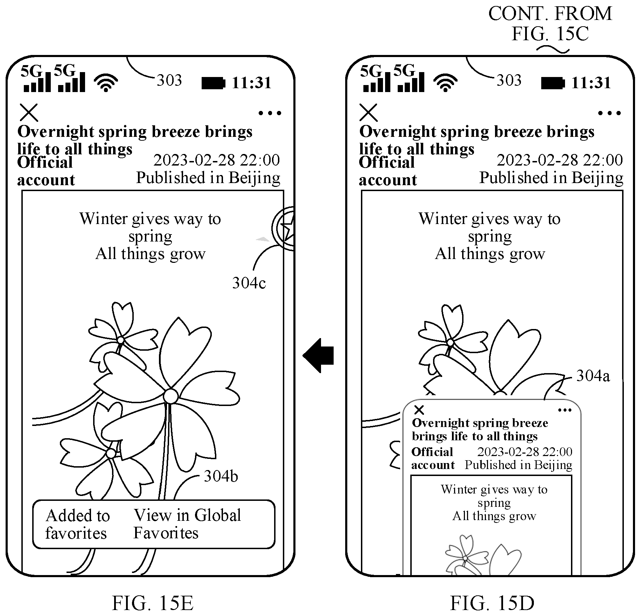

### Embodiment 5: Screenshot favoriting (as shown in FIG. 15A, FIG. 15B, FIG. 15C, FIG. 15D, and FIG. 15E)

After an electronic device enables a global favorites mode in response to a three-finger swipe-down operation, a display interface 302 shown in (b) in FIG. 6 is taken as an example. In this case, if the electronic device detects a tap operation for a screenshot favorites option, as shown in FIG. 15A, in response to the tap operation, display content (that is, a web page displayed on a display interface 301) corresponding to the thumbnail is collected into a global favorites application in a form of an image generated through screenshot. In this favoriting process, as shown in FIG. 15B, the electronic device may first display a door closing animation, to switch from the display interface 302 to an interface originally displaying the web page, and display a card 304a on the interface. The card 304a may include a screenshot image that is being collected. The screenshot image represents a screenshot image generated from display content before a door opening animation is executed. Optionally, a close button may further be included at an upper left corner of the screenshot image. In response to a tap operation for the close button, favoriting of the screenshot image can be terminated. Then, the card 304a disappears and is not displayed.

In the screenshot image favoriting process, if a tap operation for the close button at the upper left corner of the card 304a is not received within preset duration, as shown in FIG. 15C and FIG. 15D, the card 304a may move toward the bottom edge of the display interface 303, and gradually disappear.

Optionally, after the card 304a disappears, as shown in FIG. 15E, the electronic device may further display a card 304b, and other content remains unchanged. The card 304b is used for indicating that the screenshot image has been successfully favorited, and providing a link for accessing the global favorites application.

In this embodiment of this application, Global Favorites is a default favoriting manner of a screenshot. Certainly, the screenshot may alternatively be favorited in another application. This may be specifically set as needed and is not limited in the embodiments of this application.

For example, a text link, such as "View in Global Favorites", may be displayed on the card 304b. In response to a tap operation for the text link, the electronic device may display a floating state icon c1 of Global Favorites. The floating state icon c1 of Global Favorites includes an icon indicating screenshot content collected just now.

Optionally, when no operation is received within preset duration, the card 304b may automatically disappear and not be displayed.

Optionally, after the card 304a disappears, as shown in FIG. 15E, a hemispherical hidden state icon a of Global Favorites may further be displayed on an inner side of a right edge of a screen of the electronic device, to provide an entry of the global favorites application. Optionally, when display of the hidden state icon a is triggered for the first time, the electronic device may further display a prompt card near the hidden state icon a. The prompt card is used for prompting that the user can access the global favorites application by tapping the hidden state icon a, to view content collected into the global favorites application. The prompt card may also include a close button. In response to a tap operation of the user for the close button, closure of the prompt card can be triggered.

The above is merely an example of screenshot favoriting.

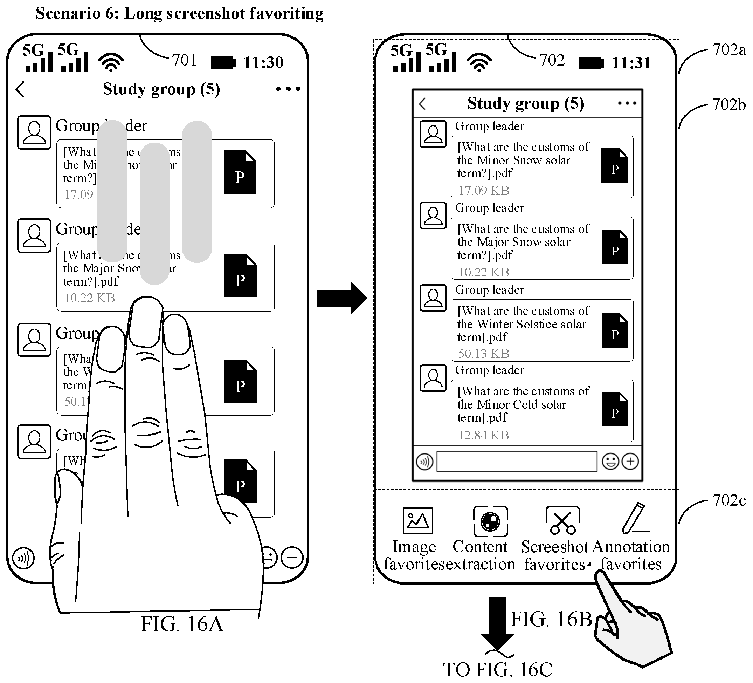

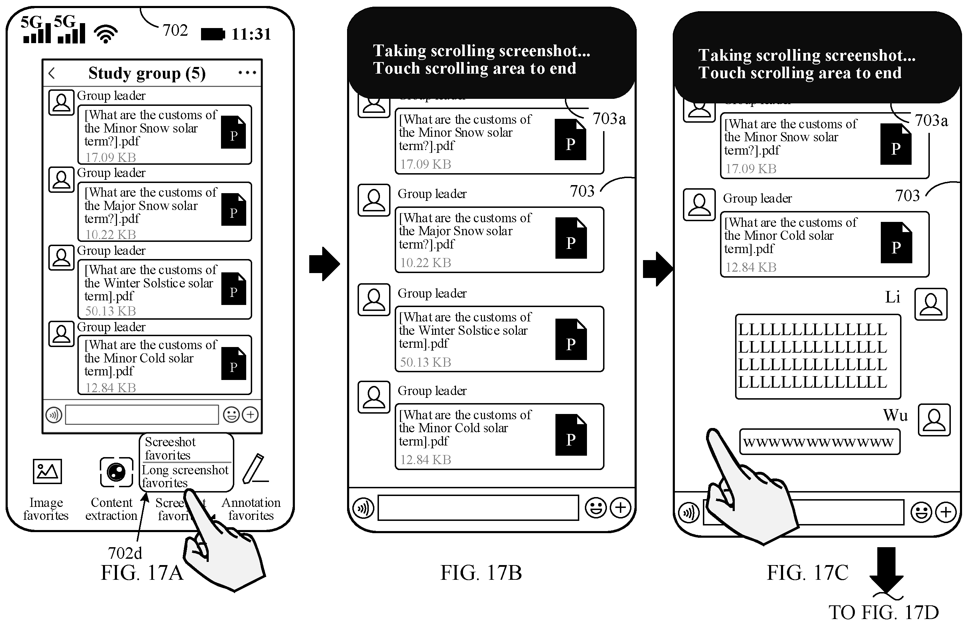

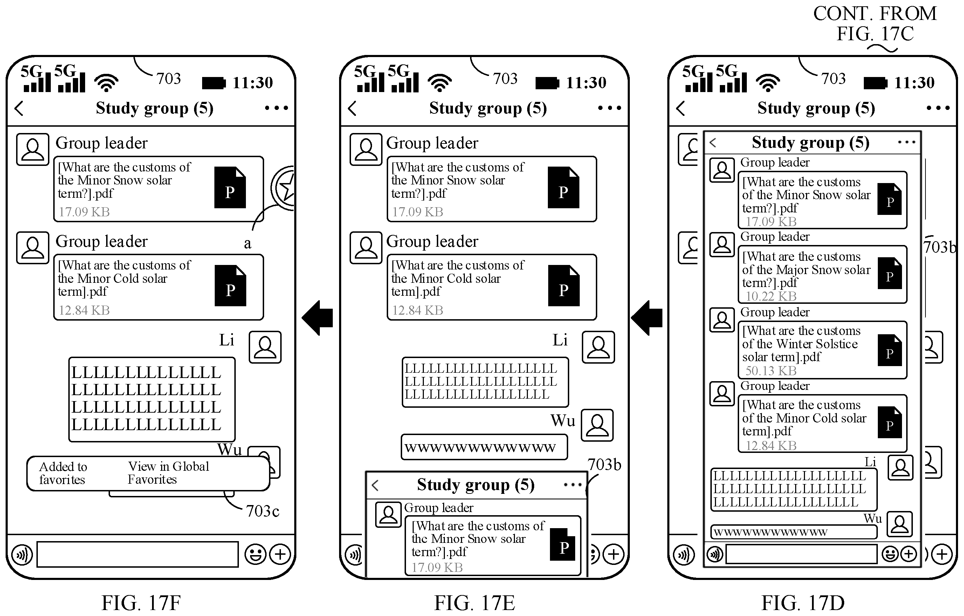

### Embodiment 6: Long screenshot favoriting (as shown in FIG. 16A, FIG. 16B, and FIG. 16C, and FIG. 17A, FIG. 17B, FIG. 17C, FIG. 17D, FIG. 17E, and FIG. 17F)

WeChat is taken as an example. An electronic device may display a chat interface of WeChat. The chat interface may include file thumbnails respectively corresponding to a plurality of files currently received by the electronic device. When the chat interface is swiped upward, the interface may further include content such as text and an image.

An interface 701 shown in FIG. 16A is the foregoing chat interface. As shown in FIG. 16A, the electronic device can detect a three-finger swipe-down operation for the display interface 701. In response to the three-finger swipe-down operation, the electronic device can enable a global favorites mode, and display a display interface 702 shown in FIG. 16B.

Optionally, during switching from the display interface 701 to the display interface 702, a "door opening animation" may be displayed.

Compared with the display interface 701, the display interface 702, like the display interface 302 in Embodiment 1, may include three parts. A first part 702a located in the top area is a status bar. Refer to the descriptions in Embodiment 1. Details are not described herein again. A second part 702b located in the middle area includes a thumbnail. The thumbnail represents the display interface 701, which is correspondingly displayed by the electronic device when the three-finger swipe-down gesture is performed. Content included in the thumbnail is the same as content of the display interface 701, and a size of the thumbnail is less than a size of the display interface 701. A third part 702c located in the bottom area is used for displaying a plurality of operation options. For specific introduction of the operation options, refer to the introduction in Embodiment 1. Details are not described herein again.

Herein, a triangle is further displayed at a lower right corner of a screenshot favorites option in general options, and the triangle may be used for triggering toggling between the general options, for example, switching from the screenshot favorites option to a long screenshot favorites option. Alternatively, the triangle may be used for triggering display of a menu card including a plurality of general options. As shown in FIG. 16B, the electronic device can detect a tap operation for the triangle at the lower right corner of the screenshot favorites option. As shown in FIG. 16C, in response to the tap operation, a menu card 702d may be displayed on the display interface 702. The menu card may include two menu options, which are "Screenshot favorites" and "Long screenshot favorites", respectively.

Optionally, in a possible implementation, as shown in FIG. 17A, the electronic device can detect a tap operation for "Long screenshot favorites" on the menu card 702d. In response to the tap operation, switching from the screenshot favorites option displayed in the third part to a long screenshot favorites option may be implemented, and other content remains unchanged. Subsequently, in response to a tap operation for the long screenshot favorites option, the electronic device can implement a function of taking a long screenshot.

Optionally, in another possible implementation, as shown in FIG. 17A, the electronic device can detect a tap operation for "Long screenshot favorites" on the menu card 702d. In response to the tap operation, as shown in FIG. 17B, the electronic device may directly proceed to capture a long image.

Referring to a display interface 703 shown in FIG. 17B, when capturing a long screenshot, the electronic device may first display a door closing animation, to switch from the display interface 702 to an original chat interface, and display a prompt bar 703a in the top area of the chat interface. The prompt bar 703a may include prompt text, for example, "Taking scrolling screen... Touch scrolling area to end". The scrolling area may indicate an area, other than the prompt bar, for displaying the chat interface. As shown in FIG. 17C, the electronic device can detect a tap operation for the scrolling area; and complete screen capturing in response to the tap operation.

After the long screenshot is taken, as shown in FIG. 17D, switching from the prompt bar 703a to a thumbnail 703b may be implemented, and other content remains unchanged. The thumbnail 703b may include a thumbnail of the long image that is being collected. Optionally, a close button may be further included at an upper left corner of the card 703b. In response to a tap operation for the close button, the electronic device can terminate favoriting of the long image, and then, the card 703b disappears and is not displayed.

In the long image favoriting process, if a tap operation for the close button at the upper left corner of the card 703b is not received within preset duration, as shown in FIG. 17E, the card 703b may further move toward the bottom edge of the display interface 703, and gradually disappear.

Optionally, after the card 703b disappears, as shown in FIG. 17F, the electronic device may further display a card 703c, and other content remains unchanged. The card 703c is used for indicating that the long image has been successfully favorited, and providing a link for accessing the global favorites application, to prompt that the user can view the collected material in the global favorites application.

In this embodiment of this application, Global Favorites is a default favoriting manner of a long screenshot. Certainly, the long screenshot may alternatively be favorited in another application. This may be specifically set as needed and is not limited in the embodiments of this application.

For example, a text link, such as "View in Global Favorites", may be displayed on the card 703c. In response to a tap operation for the text link, the electronic device may display a floating state icon c1 of Global Favorites. The floating state icon c1 of Global Favorites includes an icon indicating a document collected just now.

Optionally, when no operation is received within preset duration, the card 703c may automatically disappear and not be displayed.

Optionally, after the card 703b disappears, as shown in FIG. 17E, the electronic device may further display a prompt card near a hidden state icon a. The prompt card is used for prompting that the user can access the global favorites application by tapping the hidden state icon a, to view content collected into the global favorites application. The prompt card may also include a close button. In response to a tap operation of the user for the close button, closure of the prompt card can be triggered.

The above is merely an example of long screenshot favoriting.

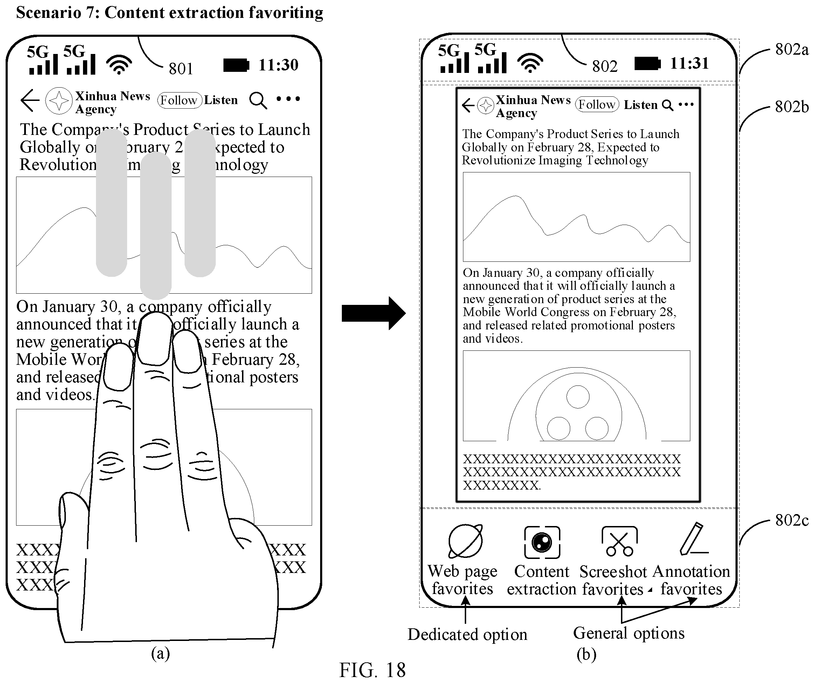

### Embodiment 7: Content extraction favoriting (as shown in FIG. 18 to FIG. 20)

A news application is taken as an example. An electronic device can detect a three-finger swipe-down operation for a display interface corresponding to a news message. In response to the three-finger swipe-down operation, the electronic device may trigger and enable a global favorites mode, and favorite display content in the global favorites mode.

A display interface 801 shown in (a) in FIG. 18 is a web page of a news article in the news application. As shown in (a) in FIG. 18, the electronic device can detect a three-finger swipe-down operation for the display interface 801. In response to the three-finger swipe-down operation, the electronic device can enable a global favorites mode, and display a display interface 802 shown in (b) in FIG. 18.

Optionally, during switching from the display interface 801 to the display interface 802, a "door opening animation" may be displayed.

Compared with the display interface 801, the display interface 802, like the display interface 302 in Embodiment 1, may include three parts. A first part 802a located in the top area is a status bar. Refer to the descriptions in Embodiment 1. Details are not described herein again. A second part 802b located in the middle area includes a thumbnail. The thumbnail represents the display interface 801, which is correspondingly displayed by the electronic device when the three-finger swipe-down gesture is performed. Content included in the thumbnail is the same as content of the display interface 801, and a size of the thumbnail is less than a size of the display interface 801. A third part 802c located in the bottom area is used for displaying a plurality of operation options. For specific introduction of the operation options, refer to the introduction in Embodiment 1. Details are not described herein again.

In addition, because the display interface 801 corresponds to a web page favoriting scenario, a dedicated option displayed in the third part is a web page favorites option. A content extraction option, a screenshot favorites option and an annotation option in general options, and the like may be further displayed in the third part.

It should be noted that the display interface 802 shown in (b) in FIG. 18 is merely a display interface style provided in this embodiment of this application. This application further provides a plurality of display interface styles, which are described subsequently and are not described herein again.

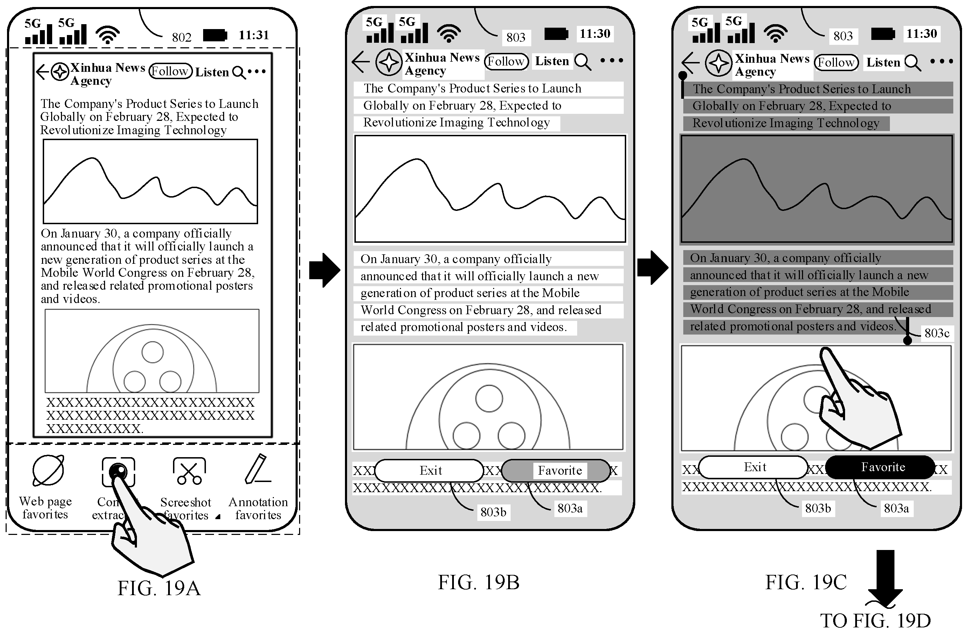

Referring to a display interface 802 shown in FIG. 19A, the electronic device can detect a tap operation for a content extraction option on the display interface 802. In response to the tap operation, display content (that is, content on the display interface 801) corresponding to the thumbnail is highlighted after being extracted.

For example, compared with the display interface 801, on a display interface 803 shown in FIG. 19B, content is highlighted. For example, a white background color is added at the bottom of text or around an image. Based on the highlighted content, a user may subsequently select content that needs to be collected. In addition, the display interface 803 may further include two buttons, which are a favorite button 803a and an exit button 803b, respectively. The favorite button 803a is used for collecting content selected by the user. The exit button 803b is used for triggering disabling of the global favorites mode.

Optionally, during switching from the display interface 802 to the display interface 803, a door closing animation may be displayed.

It should be understood that on the display interface 803 shown in FIG. 19B, because the user does not select any display content, the favorite button 803a is gray, is in an unavailable state, and cannot respond to a tap operation of the user. However, the exit button 803b is in an available state, can receive a tap operation, and terminate favoriting and disable the global favorites mode in response to the tap operation.

Based on a display interface 803 shown in FIG. 19C, the electronic device can detect a selection operation for a piece of content on the display interface 804 (for example, an operation of swiping a left handle or right handle toward the left or right direction after a long press). As shown in FIG. 19C, in response to the selection operation, partial highlighted content may be in a selected state. For ease of description, in this application, the partial content in the selected state may be recorded as target content 803c (content whose background color is gray in FIG. 19C).

Optionally, content included in the target content 803c may include text and/or an image.

Optionally, the content included in the target content 803c is content continuously arranged between the left handle and the right handle. Alternatively, the content included in the target content 803c is text content continuously arranged between the left handle and the right handle, and does not support discontinuous selection. For an image, the user further needs to perform selection by tapping.

It should be understood that on the display interface 803 shown in FIG. 19C, because the user has selected the display content, the favorite button 803 switches from the unavailable state to an available state.

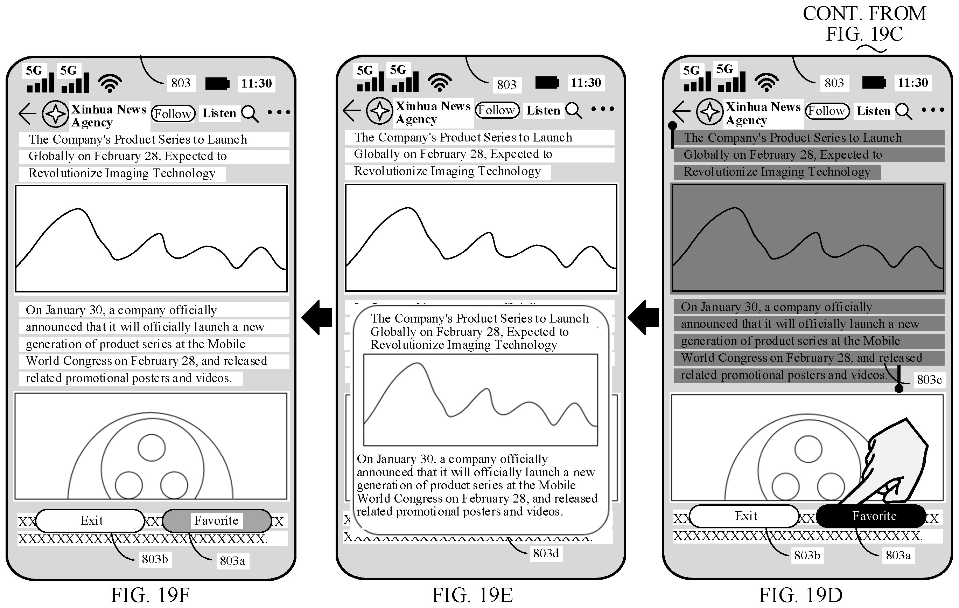

After the partial highlighted content is selected, the electronic device can detect a tap operation for the favorite button 803a. As shown in FIG. 19D, in response to the tap operation, the target content 803c is collected into the global favorites application. In this favoriting process, as shown in FIG. 19E, the target content 803c may switch to an original highlighting state, the favorite button 803a and the exit button 803b are removed, and a card 803d is displayed on the interface. The card 803d may include a thumbnail of the target content that is being collected.

Optionally, a close button may be further included at an upper left corner of the card 803d. Favoriting of the web page may be terminated in response to a tap operation for the close button. Then, the card 803d disappears and is not displayed.

Optionally, the card 803d may move toward the bottom edge of the display interface 803, and gradually disappear.

In the process of collecting the target content 803c, if a tap operation for the close button at the upper left corner of the card 803d is not received within preset duration, as shown in FIG. 19F, the card 803d may switch to the favorite button 803a and the exit button 803b for displaying, and other content remains unchanged. In this case, the favorite button 803a is gray, and is in a same state as that shown in FIG. 19B.

Based on the display interface 803 shown in FIG. 19F, if the user needs to favorite another content, the user may further continue to favorite the content according to a process shown in FIG. 19C to FIG. 19E. That is, after the content extraction function is enabled, the user may select target content for many times, tap the favorite button 803a each time to favorite the selected target content into the global favorites application, and tap the favorite button 803a for many time to favorite a plurality of pieces of target content. This is not limited in the embodiments of this application.

In this embodiment of this application, Global Favorites is a default favoriting manner of extracted content. Certainly, the extracted content may alternatively be favorited in another application. This may be specifically set as needed and is not limited in the embodiments of this application.

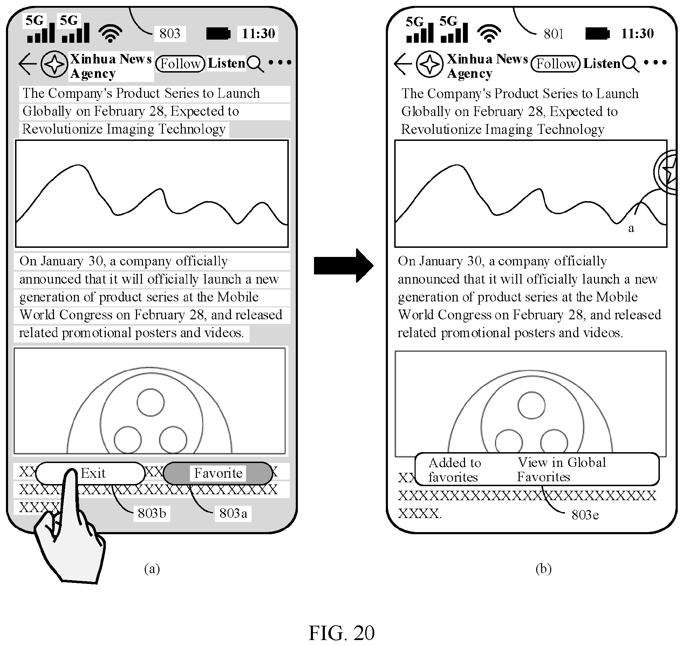

Based on a display interface 803 shown in FIG. 19F, if the favoriting is completed, the electronic device can detect a tap operation for the exit button, as shown in (a) in FIG. 20. In response to the tap operation for the exit button 803b, the global favorites mode is disabled, and the interface may switch to an interface originally displaying a web page (that is, the display interface 801), as shown in (b) in FIG. 20.

Optionally, as shown in (b) in FIG. 20, the electronic device may display a card 803e on the display interface 801, and other content remains unchanged. The card 803e is used for indicating that the extracted content has been successfully favorited, and providing a link for accessing the global favorites application, to prompt that the user can view the collected material in the global favorites application.

For example, a text link, such as "View in Global Favorites", may be displayed on the card 803e. In response to a tap operation for the text link, the electronic device may display a floating state icon c1 of Global Favorites. The floating state icon c1 of Global Favorites includes an icon indicating video excerpting content collected just now.

Optionally, after the favorite button 803a and the exit button 803b disappear, as shown in (b) in FIG. 20, a hemispherical hidden state icon a of Global Favorites may further be displayed on an inner side of a right edge of a screen of the electronic device, to provide an entry of the global favorite application. Optionally, when display of the hidden state icon a is triggered for the first time, the electronic device may further display a prompt card near the hidden state icon a. The prompt card is used for prompting that the user can access the global favorites application by tapping the hidden state icon a, to view content collected into the global favorites application. The prompt card may also include a close button. In response to a tap operation of the user for the close button, closure of the prompt card can be triggered.

Optionally, when no operation is received within preset duration, the card 803e may automatically disappear and not be displayed.

Optionally, after the foregoing extracted content is successfully favorited, the global favorites application may continue to be displayed in the hidden state icon a on an interface of the global favorites application, to indicate to the user that the global favorites application is still running, and the user can collect any material into Global Favorites at any time.

The above is merely an example of extracted content favoriting.

Optionally, in a possible implementation, for a display interface 802 shown in FIG. 19A, the electronic device can detect a tap operation for a content extraction option on the display interface 802. In response to the tap operation, display content (that is, content on the display interface 801) corresponding to the thumbnail is extracted, and segmented into word blocks for presentation. For example, a white background color is independently added to the bottom of each word and the bottom of each image. Based on the content presented in the word-segmented block form, the user may subsequently select content that needs to be collected. For example, required block content is doodled and/or selected by tapping. Other content is similar to that of the foregoing example, and details are not described herein again.

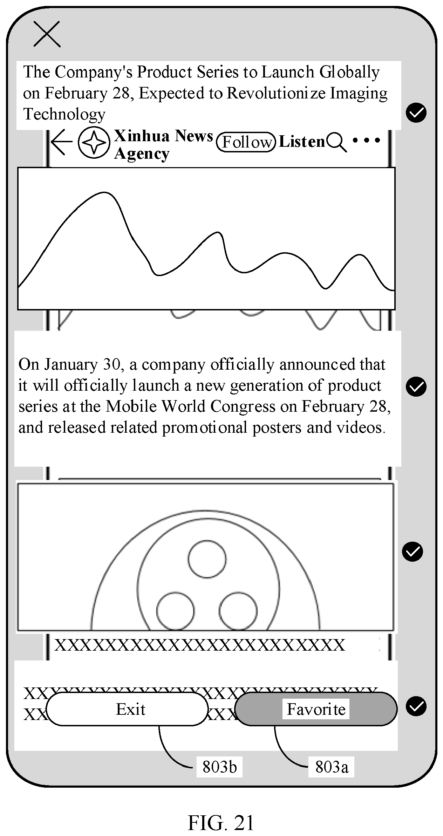

Optionally, in another possible implementation, for a display interface 802 shown in FIG. 19A, the electronic device can detect a tap operation for a content extraction option on the display interface 802. In response to the tap operation, display content (that is, content on the display interface 801) corresponding to the thumbnail is extracted, and structurally tiled on a new layer. As shown in FIG. 21, based on the structurally-tiled extracted content, the user may subsequently check content that needs to be collected, or favorite all checked content by a single tap. Other content is similar to that of the foregoing example, and details are not described herein again.

The foregoing content is the introduction related to seven collection scenarios provided in the embodiments of this application

In the embodiments of this application, in combination with the global favorites application, materials of different sources and materials of different types can be favorited, favoriting scenarios are expanded, and a unified favoriting manner, namely, a three-finger swipe-down manner, is achieved. When the favoriting manner provided in this application is triggered, a manner in which a user expects content retention can be accurately determined, and a corresponding operation option is provided to support material retention. In addition, the unified favoriting manner has no learning cost for the user, which can help the user efficiently collect materials in any scenario, and collect all materials into the global favorites application.

### Second Part:

A display interface 301 shown in (a) in FIG. 6 is taken as an example. The interface is a display interface corresponding to a web page. As shown in (a) in FIG. 6, an electronic device can detect a three-finger swipe-down operation for the display interface 301. In response to the three-finger swipe-down operation, the electronic device can enable a global favorites mode, and a displayed interface may be any one in FIG. 22A, FIG. 22B, FIG. 22C, and FIG. 22D.

**Example I:** As shown in FIG. 22A, a display interface 302 includes three parts. A first part 302a located in the top area is a status bar, a second part 302b located in the middle area may include a thumbnail, and a third part 302c located in the bottom area is used for displaying a plurality of operation options. For introductions of the status bar, the thumbnail, and the operation options, specifically refer to Embodiment 1. Details are not described herein again.

Optionally, during displaying, in the operation options in the third part 302c, a dedicated option, a content extraction option, and a general option are sequentially displayed from left to right.

Compared with a third part shown in (b) in FIG. 6, the third part shown in FIG. 22A may further include a favorites space icon indicating all materials that have been collected into a global favorites application and an icon name. For example, the favorites space icon is an icon M shown in FIG. 22A. Optionally, the favorites space icon M may be formed by combining independent icons of a plurality of collected materials. Optionally, the icon name may be, for example, "My Favorites" by default.

Optionally, the favorites space icon, the dedicated option, the content extraction option, and the general option may be sequentially displayed from left to right or from right to left.

**Example II:** As shown in FIG. 22B, a display interface 302 includes three parts. A first part 302a located in the top area is a status bar, a second part 302b located in the middle area may include a thumbnail, and a third part 302c located in the bottom area is used for displaying a plurality of operation options. For introductions of the status bar, the thumbnail, and the operation options, specifically refer to Embodiment 1. Details are not described herein again.

Compared with a third part shown in (b) in FIG. 6, the third part shown in FIG. 22B may be divided into two half areas, namely, a left half area and a right half area. The plurality of operation options may be displayed in the left half area, and a favorites space and a space name may be displayed in the right half area. The favorites space may include a plurality of material icons, and the material icon indicates a material that has been collected into a global favorites application. Material icons corresponding to three recently collected materials may be displayed by default. For example, the space name may be "Magic Favorites Space". Optionally, the three material icons are displayed in a tiled manner, or may be displayed in a semi-overlaid manner. This is not limited in the embodiments of this application.

Optionally, during displaying, in the operation options in the left half area, a dedicated option and a content extraction option are sequentially displayed from left to right.

Optionally, locations of the left half area and the right half area may be exchanged.

**Example III:** As shown in FIG. 22C, a display interface 302 may include four parts. A first part 302a located in the top area is a status bar, a second part 302b located in the middle area may include a thumbnail, and a third part 302c is used for displaying a plurality of operation options. For introductions of the status bar, the thumbnail, and the operation options, specifically refer to Embodiment 1. Details are not described herein again.

Compared with an interface shown in (b) in FIG. 6, a favorites space and a space name may be displayed in a fourth part 302d shown in FIG. 22C. The favorites space may include thumbnails of a plurality of materials that have been collected into a global favorites application. For example, thumbnails corresponding to four recently collected materials may be displayed by default, and the four thumbnails are displayed in a tiled manner. For example, the space name may be "Magic Favorites Space".

Optionally, the third part 302c is located at the bottom, and the fourth part 302d may be located between the first part 302a and the second part 302b, as shown in FIG. 22C. Alternatively, the fourth part 302d is located at the bottom, and the third part 302c may be located between the first part 302a and the second part 302b, as shown in FIG. 22D.

Optionally, during displaying, in the operation options in the third part 302c, a dedicated option, a content extraction option, and a general option are sequentially displayed from left to right.

**Example IV:** (a) in FIG. 23 is the same as (a) in FIG. 6. In response to a three-finger swipe-down operation, an electronic device may display a display interface 302 shown in (b) in FIG. 23. The display interface 302 may include four parts. A first part 302a located in the top area is a status bar, a third part 302c located in the middle area is used for displaying a plurality of operation options, and a second part 302b located in the bottom area may include a thumbnail. For introductions of the status bar, the thumbnail, and the operation options, specifically refer to Embodiment 1. Details are not described herein again.

Compared with an interface shown in (b) in FIG. 6, a favorites space, a close button, a setting button, and the like may be displayed in a fourth part 302d shown in (b) in FIG. 23. The favorites space may include thumbnails of a plurality of materials that have been collected into a global favorites application. For example, thumbnails corresponding to six recently collected materials may be displayed by default, and the six thumbnails are displayed in a tiled manner.

Optionally, the fourth part may be displayed in a left hot zone, as shown in (b) in FIG. 23, or may be displayed in a right hot zone.

Optionally, during displaying, in the operation options in the third part 302c, a dedicated option, a content extraction option, and a general option are sequentially displayed from left to right.

It should be understood that the favorites space is equivalent to a floating state of Global Favorites, and content included in the favorites space is the same as content included in the floating state.

Optionally, the thumbnails in the foregoing four examples may be displayed in a tiled form.

Optionally, the second part 302b in the foregoing four examples may alternatively be referred to as an original application presentation area, and is used for displaying display content before the display interface 302 is triggered through a three-finger swipe-down operation, and the display content in the second part 302b may be switched through an operation of a user. For example, in response to an up-and-down swipe operation for original display content in the second part 302b, the display content may be switched.

It should be understood that as shown in FIG. 22C and FIG. 22D, the third part 302c is an operation area, and the fourth part 302d is a material presentation area.

### 1. Favoriting Manner I

With reference to Example IV, referring to a display interface 1002 shown in (a) in FIG. 24, an electronic device can detect a tap operation for a web page favorites option on the display interface 1002. In response to the tap operation, display content (that is, a web page displayed on the display interface 301) corresponding to the thumbnail is collected into a global favorites application.

In this collection process, as shown in (b) in FIG. 24, web page content corresponding to the thumbnail is gradually zoomed out, and dynamically moves from a display area on the right to a favorites space on the left.

After the collection is completed, on a display interface 1003 shown in (c) in FIG. 24, the favorites space on the left includes an icon of the web page content collected just now, and icons corresponding to previously collected materials move toward the bottom edge of the electronic device in sequence.

It should be noted that the above merely takes web page favoriting as an example. Based on a display style shown in (b) in FIG. 23, in this embodiment of this application, an excerpted video, a document, an image, a screenshot, a long screenshot, extracted content, and the like may be further favorited. For details, refers to the introductions in Embodiment 2 to Embodiment 7. Details are not described herein again.

### 2. Favoriting Manner II

With reference to Example IV, referring to a display interface 1002 shown in FIG. 25A, an electronic device can detect a user operation for an image included in an interface presentation area on the display interface 1002, and in response to the user operation, the image is collected into a global favorites application.

Optionally, the user operation may include long-press and drag operations, or the user operation may be a throw operation.

It should be understood that the long-press and drag operations are continuous operations. During long pressing and dragging, a finger pressed by a user would not lift.

An example in which the user operation includes long-press and drag operations is used. In the collection process, as shown in FIG. 25B, in response to a long-press operation, an image is selected, and the electronic device may display a thumbnail corresponding to the image at a location where the user performs the long-press operation. Next, the user may move the image thumbnail by dragging, to move the image. In response to the drag operation for the image thumbnail, the image thumbnail may be moved from a display area on the right to a favorites space on the left. Optionally, as shown in FIG. 25B and FIG. 25C, in the process of moving from the display area on the right to the favorites space on the left, the image thumbnail is gradually zoomed out.

After the collection is completed, on a display interface 1003 shown in FIG. 25D, the favorites space on the left includes an icon of the image collected just now, and icons corresponding to previously collected materials move toward the bottom edge of the electronic device in sequence.

Optionally, the above merely takes the interface presentation area including an image as an example. Optionally, the interface presentation area may further include a document, a video, a screenshot image, a long screenshot image, and the like.

### 3. Manner I and Manner II for second favoriting after switching between applications following first favoriting

Optionally, in a possible implementation, after first favoriting is performed, if a user expects to switch between applications to perform second favoriting on another material, based on a display interface 302 shown in FIG. 26A, the user may perform a swipe operation from the bottom edge of an electronic device to the center of a display screen. In response to the swipe operation, the electronic device may switch from the display interface 302 to a desktop 1001, as shown in FIG. 26B.

Optionally, the swipe operation may further include swiping from a left edge of the electronic device to the center, or swiping from a right edge of the electronic device to the center. This is not limited in the embodiments of this application.

After switching to the desktop 1001, the electronic device can detect a user operation of the user for a gallery application, for example, detect a tap operation for the gallery APP. In response to the tap operation, the electronic device may display a main interface of the gallery application. After detecting a tap operation for any image thumbnail on the main interface, the electronic device may display, in response to the tap operation, an image corresponding to the thumbnail in a full-screen manner, as a display interface 1002 shown in FIG. 26C.

When the electronic device displays an image, if the user wants to favorite the image, the user may trigger enabling of a global favorites mode again in a three-finger swipe-down manner.

For example, as shown in FIG. 26C, the electronic device can detect a three-finger swipe-down operation for the display interface 1002. In response to the three-finger swipe-down operation, the electronic device can enable a global favorites mode, and display a display interface 1003 shown in FIG. 26D.

For a style of the display interface 1003, refer to the introduction in Example IV. Details are not described herein again.

In addition, because the display interface 1003 corresponds to an image favoriting scenario, a dedicated option displayed in a third part is an image favorites option. A content extraction option, and a screenshot favorites option and the like in general options may be further displayed in the third part.

The electronic device can detect a tap operation for an image favorites option on the display interface 1003. In response to the tap operation, the image is collected into the global favorites application. For the favoriting process, refer to the foregoing descriptions of Favoriting Manner I. Details are not described herein again.

Optionally, in another implementation, after first favoriting is performed, if a user expects to switch between applications to perform second favoriting on another material, in a local area of a display screen, that is, in an original application presentation area, the user may perform an operation on an interface displayed in the original application presentation area, to switch between applications in the original application presentation area.

For example, based on a display interface 302 shown in FIG. 26A, the user performs a tap operation on a close button included at an upper left corner of the interface in the original application presentation area, or performs a swipe operation in a direction from the bottom to the center in the original application presentation area. In response to the tap operation or swipe operation, the interface in the original application presentation area may be switched to a desktop.

After the interface in the original application presentation area is switched to the desktop, the electronic device can detect a tap operation of the user for a gallery application. In response to the tap operation, the electronic device may display a main interface of the gallery application in the original application presentation area. After detecting a tap operation for any image thumbnail on the main interface, the electronic device may display, in response to the tap operation, an image corresponding to the thumbnail in the original application presentation area.

When the electronic device switches to display an image in the original application presentation area, because a type of content displayed in the original application presentation area has changed, the electronic device may indicate in real time that an option displayed in the operation area is changed correspondingly. For example, a dedicated option is switched from a web page favorites option to an image favorites option.

Then, as shown in FIG. 26D, in response to a tap operation for the image favorites option, the image displayed in the original application presentation area may be favorited in a global favorites application.

It should be understood that in this favoriting manner, after a split-screen display mode of a display screen is triggered by a three-finger swipe-down operation, the electronic device is equivalently always in the global favorites mode, and in a case that the split-screen display mode is not disabled, switching between applications and second favoriting of materials can be performed in the original application presentation area in response to a plurality of operations of a user.

For the foregoing two manners, after second favoriting is ended, if the user expects to switch between applications to favorite another material, the user may perform switching between applications and material favoriting in any one of the foregoing manners. If the user expects to disable the global favorites mode, the user may tap a close button at an upper left corner of the display interface 1003. In response to the tap operation for the close button, the electronic device can disable the global favorites mode, and switch back to a display interface before the global favorites mode is enabled.

For example, after second favoriting of the image is ended, if the user wants to disable the global favorites mode, the user may tap a close button at an upper left corner of the display interface 1003, as shown in FIG. 26E. In response to a tap operation for the close button, the electronic device can disable the global favorites mode, and switch back to the display interface 1002 before the global favorites mode is enabled, as shown in FIG. 26F.

### 4. Manner III for second favoriting after switching between applications following first favoriting

After first favoriting is performed, if a user expects to switch between applications to perform second favoriting on another material, the user needs to disable a global favorites mode first. For example, the user may tap a close button. In response to the tap operation for the close button, an electronic device disables the global favorites mode, and switches back to a display interface before the global favorites mode is enabled.

For example, after first favoriting of a web page is performed, based on a display interface 302 shown in FIG. 27A, the electronic device can detect a tap operation of the user for the close button. In response to the tap operation for the close button, the electronic device can disable the global favorites mode and switch back to a display interface 301 before the global favorites mode is enabled.

Next, the electronic device may continue to perform second favoriting in response to an operation of the user. For example, based on a display interface 301 shown in FIG. 27B, the user may perform a swipe operation in a display area at the bottom of the electronic device from the bottom to the center. In response to the swipe operation, the electronic device may switch from the display interface 301 to a desktop 1001, as shown in FIG. 27C.

Optionally, the swipe operation may further include swiping from a left edge of the electronic device to the center, or swiping from a right edge of the electronic device to the center. This is not limited in the embodiments of this application.

After switching to the desktop 1001, the electronic device can detect a user operation of a user for a gallery application, for example, detect a tap operation for the gallery APP. In response to the tap operation, the electronic device may display a main interface of the gallery application. After detecting a tap operation for any image thumbnail on the main interface, the electronic device may display, in response to the tap operation, an image corresponding to the thumbnail in a full-screen manner, as a display interface 1002 shown in FIG. 27D.

When the electronic device displays an image, if the user wants to favorite the image, the user may trigger enabling of the global favorites mode again in a three-finger swipe-down manner.

For example, as shown in FIG. 27D, the electronic device can detect a three-finger swipe-down operation for a display interface 1002. In response to the three-finger swipe-down operation, the electronic device may enable the global favorites mode, and display a display interface 1003 shown in FIG. 27E.

For a style of the display interface 1003, refer to the introduction in Example IV. Details are not described herein again.

In addition, because the display interface 1003 corresponds to an image favoriting scenario, a dedicated option displayed in a third part is an image favorites option. A content extraction option, and a screenshot favorites option and the like in general options may be further displayed in the third part.

The electronic device can detect a tap operation for an image favorites option on the display interface 1003. In response to the tap operation, the image is collected into the global favorites application. For the favoriting process, refer to the foregoing descriptions of Favoriting Manner I. Details are not described herein again.

After second favoriting is ended, if the user expects to switch between applications to favorite another material, the user may perform switching between applications and material favoriting in the foregoing manner. If the user expects to disable the global favorites mode, the user may tap a close button at an upper left corner of the display interface 1003. In response to the tap operation for the close button, the electronic device can disable the global favorites mode, and switch back to a display interface before the global favorites mode is enabled.

For example, after second favoriting of the image is ended, if the user wants to disable the global favorites mode, the user may tap a close button at an upper left corner of the display interface 1003. In response to the tap operation for the close button, the electronic device can disable the global favorites mode, and switch back to the display interface 1002 before the global favorites mode is enabled.

### 5. Distribution of favorited material

A notes application is taken as an example. When an electronic device displays the notes application, if a user needs to add a favorited material to a note, the user may trigger enabling of a global favorites mode in a three-finger swipe-down manner, and then distribute the material in the global favorites mode.

For example, a display interface 1101 shown in FIG. 28A is a display interface corresponding to the notes application. The electronic device can detect a three-finger swipe-down operation for the display interface 1101. In response to the three-finger swipe-down operation, the electronic device may enable a global favorites mode, and display a display interface 1102 shown in FIG. 28B. The display interface is the same as a display interface 1003 displayed in FIG. 26E or in FIG. 27F after second favoriting of an image is ended.

Based on the display interface 1102 shown in FIG. 28B, the electronic device may detect long-press and drag operations for an image icon in a favorites space in a left hot zone on the display interface 1102. In response to the long-press and drag operations, an image is distributed to the notes application indicated by a thumbnail on the right.

It should be understood that the long-press and drag operations herein are non-continuous operations, and during the long-press and drag operations, a finger pressed by the user may be lifted.

Optionally, after the long-press operation and before the drag operation, a plurality of tap operations may be performed on materials in the favorites space, to select a plurality of materials. Subsequently, the plurality of materials may be distributed at once when the drag operation is performed.

For example, as shown in FIG. 28B, in response to a long-press operation for the image icon in the favorites space, the image icon is in a selected state. The selected state indicates that a semi-transparent layer and a selected mark are added on the icon. The selected mark includes, for example, a circular area and a checkmark located in the circular area.

Based on a display interface 1102 shown in FIG. 28C, if the user wants to distribute the sixth image at the bottom of the favorites space together, the user may select the icon through a tap operation. As shown in FIG. 28C, the electronic device can detect a tap operation for the sixth image icon at the bottom of the favorites space, and in response to the tap operation, the image icon may be in a selected state.

Next, the user may drag and move two icons in the selected state, to distribute materials. In response to a drag operation for an image icon, the image icon may be moved from the favorites space on the left to a display area on the right. Optionally, as shown in FIG. 28D, in the process of moving from the favorites space on the left to the display area on the right, a plurality of independent images icons may be switched from being arranged in a tiled manner to being arranged in a stacked manner. In addition, a quantity of icons and an add mark (such as a plus sign) may further be displayed above the stacked icons. The add mark is used for indicating a location to which a material can be added in the dragging process.

Optionally, in the process of moving from the favorites space on the left to the display area on the right, the stacked icons are gradually zoomed in.

After moving the material to the location that is in the display area on the right and to which a material may be added, the user may lift the finger to release the material. In response to the finger being lifted, the electronic device may add the dragged material to the display area on the right, as shown in FIG. 28E.

After the distribution is completed, as shown in FIG. 28E, the material dragged just now still exists in the favorites space, and a display situation in the favorites space after the distribution is the same as that in the favorites space before the distribution.

After distribution is completed, if the user wants to disable the global favorites mode, the user may tap a close button at an upper left corner of the display interface 1102, as shown in FIG. 28E. In response to the tap operation for the close button, the electronic device can disable the global favorites mode and switch back to the display interface 1101 before the global favorites mode is enabled, that is, the interface corresponding to the notes application, as shown in FIG. 28F.

It should be understood that because the image material is distributed to the note in the global favorites mode, after the interface of the note application is displayed again, display content on the interface should include the distributed image material, and should be the same as content in the display area on the right corresponding to FIG. 28E.

### 6. Preview

A display interface 1003 shown in FIG. 25D is taken as an example. After a global favorites mode is enabled and image collection is completed, if a user wants to preview an image favorited just now, the user may directly tap an image icon displayed in a left area, as shown in (a) in FIG. 29. In response to the tap operation for the image icon, an electronic device may display a material preview interface corresponding to the image icon, as shown in (b) in FIG. 29.

### 7. Share

Optionally, (b) in FIG. 29 is taken as an example. When a preview interface of an image is displayed, the preview interface may further include a share button and a delete button. The share button is used for triggering sharing a material to another device or application, and the delete button is used for triggering deletion of a material from Global Favorites.

Referring to (a) in FIG. 30, the electronic device can detect a tap operation for the share button. In response to the tap operation, the electronic device may display a share card on the preview interface, as shown in (b) in FIG. 30.

Optionally, as shown in (b) in FIG. 30, the share card included in the preview interface may include four display areas sequentially from top to bottom, which are, for example, a first display area 30a, a second display area 30b, a third display area 30c, and a fourth display area 30d, respectively.

An icon of the shared material, a name of the material, a data size of the material, and a format of the material are displayed in the first display area 30a. Herein, a small triangle may further be displayed beside the format of the material, which may be referred to as a drop-down menu control, and is configured to display a drop-down menu in response to triggering of the user and provide more image format options for the user to select. In other words, the format of the material may be switched based on selection of the user.

The second display area 30b may include device icons of a plurality of devices. These devices have established trusted device connections to the device. A connection manner is not limited in this application. The icons of the plurality of devices may be used for triggering sending a material to a corresponding device. For example, the icons of the plurality of devices may include "X30 of user 1", and subsequently, in response to a tap operation for the device icon, the electronic device may send the material to a device indicated by "X30 of user 1".

The third display area 30c may include a plurality of application icons. The plurality of application icons may be used for triggering sharing a material to a corresponding application. For example, the plurality of application icons may include a browser, a contact, an email, a note, a gallery, and the like. Subsequently, in response to a tap operation for a notes application icon, the electronic device may send the material to the notes application.

The fourth display area 30d may include two options, namely, "Save" and "Print". "Save" may store a material on the device, and does not share the material. "Printing" may send the material to a connected printer for printing.

The above is merely an example of a sharing manner.

In the embodiments of this application, after the global favorites mode is enabled by using the unified gesture operation, on the display interface, the presentation area including the collected material and the operation area may be combined into one. The interface layout is different from the conventional technology, and is more convenient for the user to use. With reference to the display area and the operation area that are combined into one, not only material collection, but also material distribution, preview, and the like can be implemented, thereby implementing more functions. In addition, when the user triggers enabling of the global favorites mode, the operation area may further provide a corresponding operation option to support material retention accurately according to a manner in which the user expects content retention.

Compared with the conventional technology, a three-finger swipe-down operation in the conventional technology typically corresponds to only two materials, namely, a web page and an excerpted video, and a material is collected into a notes application when it is determined that the material is any one of the two types of materials, and material collection is performed only once through one three-finger swipe-down operation. The three-finger swipe-down operation in this application is equivalent to a trigger gesture for enabling a global favorites mode. After the global favorites mode is enabled, materials of a plurality of sources and a plurality of types can be collected, a plurality of materials can be collected from a same application or different applications, and functions of material distribution, preview, sharing, and the like can further be implemented. The three-finger swipe-down operation in the embodiments of this application is defined more widely.

In addition, Global Favorites provided in the embodiments of this application is totally different from processing logic of the conventional technology. In the conventional technology, it is equivalent to that processing is performed on an application side of a collected material. However, in this application, when a user triggers Global Favorites, display content may be determined, and a corresponding retention manner and an accessibility operation option may be provided, which provides more operation possibilities for the user, and provides more processing possibilities for a material in a favoriting process. It is equivalent to that operations and processing are switched from the application side of the collected material to the global favorites application side used for collecting materials.

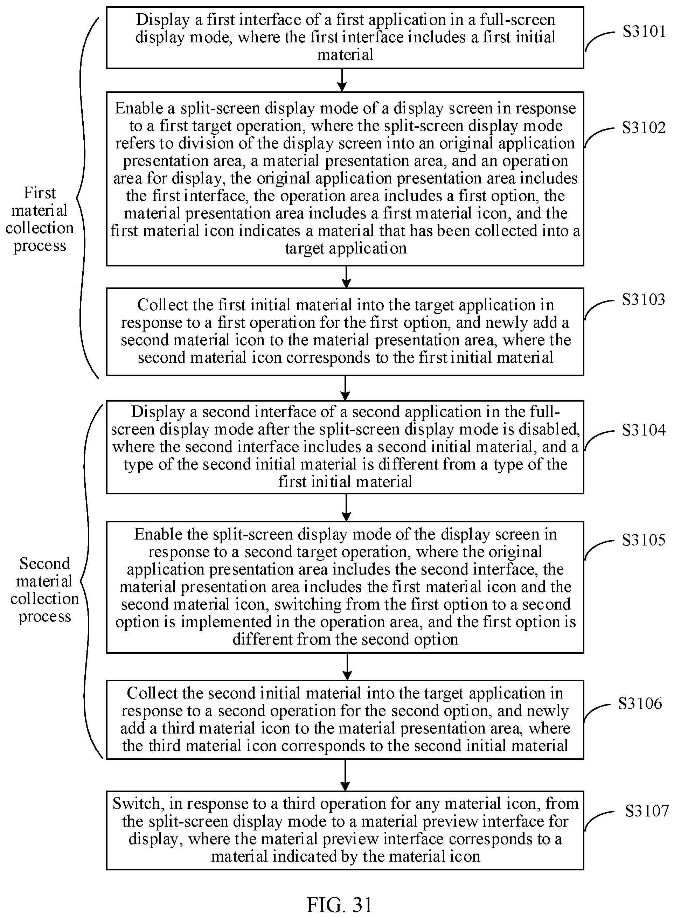

**FIG. 31** **is an example flowchart of a material processing method according to an embodiment of this application.**

In some possible cases, for an example process of processing a material by an electronic device, refer to the following descriptions of step S3101 to step S3107.

S3101: Display a first interface of a first application in a full-screen display mode, where the first interface includes a first initial material.

It may be understood that when the first interface of the first application is displayed in the full-screen display mode, the first interface may not include a status bar.

S3102: Enable a split-screen display mode of a display screen in response to a first target operation, where the split-screen display mode refers to division of the display screen into an original application presentation area, a material presentation area, and an operation area for display, the original application presentation area includes the first interface, the operation area includes a first option, the material presentation area includes a first material icon, and the first material icon indicates a material that has been collected into a target application.

It may be understood that the target application is the global favorites application involved in the foregoing description.

It may be understood that the first target operation is the same as a second target operation.

For example, the first target operation and the second target operation may be the three-finger swipe-down operations involved in the foregoing description.

It may be understood that a first operation, a second operation, and a third operation may be tap operations.

In a possible implementation, the first interface may indicate a display interface 301 shown in (a) in FIG. 23, the split-screen display mode may indicate a display interface 302 shown in FIG. 22C or FIG. 22D or shown in (b) in FIG. 23, the original application presentation area is a second part 602b, the operation area is a third part 302c, and the material presentation area is a fourth part 302d.

In a possible implementation, the first interface may indicate a display interface 301 shown in (a) in FIG. 6, the split-screen display mode may indicate a display interface 302 shown in (b) in FIG. 6, the original application presentation area is a second part 302b, and the operation area is a third part 302c. The first initial material is a web page type. Therefore, a corresponding first option is a web page favorites option.

In a possible implementation, the first interface may indicate a display interface 501 shown in (a) in FIG. 11, the split-screen display mode may indicate a display interface 502 shown in (b) in FIG. 11, the original application presentation area is a second part 502b, and the operation area is a third part 502c. The first initial material is a document type. Therefore, a corresponding first option is a document favorites option.

In a possible implementation, the first interface may indicate a display interface 601 shown in (a) in FIG. 13, the split-screen display mode may indicate a display interface 602 shown in (b) in FIG. 13, the original application presentation area is a second part 602b, and the operation area is a third part 602c. The first initial material is an image type. Therefore, a corresponding first option is an image favorites option.

S3103: Collect the first initial material into the target application in response to a first operation for the first option, and newly add a second material icon to the material presentation area, where the second material icon corresponds to the first initial material.

S3104: Display a second interface of a second application in the full-screen display mode after the split-screen display mode is disabled, where the second interface includes a second initial material, and a type of the second initial material is different from a type of the first initial material.

It may be understood that when the second interface of the second application is displayed in the full-screen display mode, the second interface may not include a status bar.

S3105: Enable the split-screen display mode of the display screen in response to a second target operation, where the original application presentation area includes the second interface, the material presentation area includes the first material icon and the second material icon, switching from the first option to a second option is implemented in the operation area, and the first option is different from the second option.

It may be understood that the first option corresponds to the type of the first initial material, and the second option corresponds to the type of the second initial material. When the type of the material is different, the first option is different.

S3106: Collect the second initial material into the target application in response to a second operation for the second option, and newly add a third material icon to the material presentation area, where the third material icon corresponds to the second initial material.

The collection processes of the first initial material and the second initial material may indicate any two of a web page favoriting process shown in FIG. 8A, FIG. 8B, FIG. 8C, FIG. 8D, FIG. 8E, and FIG. 8F, or FIG. 24, a document favoriting process shown in FIG. 12A, FIG. 12B, FIG. 12C, FIG. 12D, and FIG. 12E, an image favoriting process shown in FIG. 14A, FIG. 14B, FIG. 14C, FIG. 14D, and FIG. 14E, and the like.

S3107: Switch, in response to a third operation for any material icon, from the split-screen display mode to a material preview interface for display, where the material preview interface corresponds to a material indicated by the material icon.

The material preview process may indicate a preview process shown in FIG. 29.

In the embodiments of this application, previewing of a collected material may further be directly triggered by using the material icon shown in the material presentation area in the split-screen display mode.

In the embodiments of this application, the split-screen display mode of the display screen may be triggered through a unified target operation, to indicate that a global favorites mode is enabled. An operation manner is simple and efficient, and favoriting of materials of different sources and different types can be achieved. In addition, when the split-screen display mode is enabled, a manner in which a user expects content retention can be accurately determined, and a corresponding operation option is provided to support material retention. In the split-screen display mode, the original application presentation area that is displayed before the global favorites mode is enabled is displayed together with the new operation area and the material presentation area to facilitate viewing and operations of a user and expand an operation function. In addition, all materials are collected into the global favorites application.

**The following describes an apparatus involved in the embodiments of this application.**

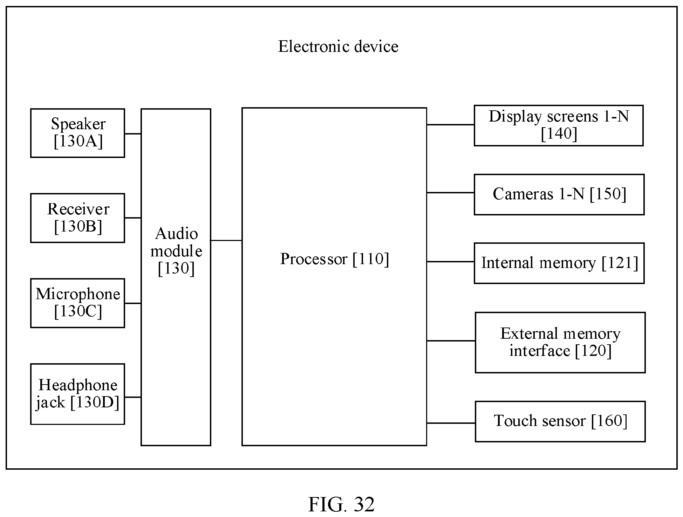

FIG. 32 is a diagram of a hardware structure of an electronic device according to an embodiment of this application.

The electronic device may include a processor 110, an external memory interface 120, an internal memory 121, an audio module 130, a speaker 130A, a receiver 130B, a microphone 130C, a headphone jack 130D, a display screen 140, a camera 150, and a touch sensor 160.

The structure shown in this embodiment of this application does not constitute a specific limitation on the electronic device. In some other embodiments of this application, the electronic device may include more or fewer components than those shown in the figure, or some components are combined, or some components are split, or a different component arrangement is adopted. The components shown in the figure may be implemented by using hardware, software, or a combination of software and hardware. An interface connection relationship between the modules shown in this embodiment of this application is merely an example for description, and does not constitute a limitation on the structure of the electronic device.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). A memory may be further disposed in the processor 110 and is configured to store instructions and data.

The electronic device implements a display function by using the GPU, the display screen 140, the application processor, and the like.

The GPU is a microprocessor for image processing and connects the display screen 140 and the application processor. The GPU is configured to perform mathematical and geometric calculation and render graphics. The processor 110 may include one or more GPUs that execute program instructions to generate or change display information. The display screen 140 is configured to display an image, a video, or the like. In some embodiments, the electronic device may include one or N display screens 140. N is a positive integer greater than 1.

In this embodiment of this application, a capability of the electronic device to display the user interface shown in FIG. 3 to FIG. 31 relies on the GPU, the display screen 140, and a display function provided by the application processor.

The camera 150 is configured to capture a static image or video. The ISP is configured to process data fed back by the camera 150. Light is transmitted to a photosensitive element of the camera through a lens. An optical signal is converted into an electrical signal, and the photosensitive element of the camera transmits the electrical signal to the ISP for processing, to convert the electrical signal into an image visible to naked eyes. The electronic device may include 1 or N cameras 150. N is a positive integer greater than 1. The video codec is configured to compress or decompress a digital video. The electronic device can support one or more video codecs. In this way, the electronic device may play or record videos in a plurality of coding formats, for example, Moving Picture Experts Group (Moving Picture Experts Group, MPEG) 1, MPEG2, MPEG3, and MPEG4.

The internal memory 121 may include one or more random access memories (random access memory, RAM), and one or more non-volatile memories (non-volatile memory, NVM). The random access memory may be directly read and written by the processor 110, may be configured to store executable programs (for example, machine instructions) of an operating system or another running program, and may further be configured to store data and the like of users and applications. The non-volatile memory may also store executable programs, and data and the like of users and applications, and may be loaded into the random access memory in advance to be directly read and written by the processor 110.

In this embodiment of this application, code for implementing the information processing method according to the embodiments of this application may be stored in the non-volatile memory. When running a camera application, the electronic device may load the executable code stored in the non-volatile memory to the random access memory.

The external memory interface 120 may be configured to connect to an external non-volatile memory, to expand a storage capability of the electronic device.

The electronic device may implement an audio function by using the audio module 130, the speaker 130A, the receiver 130B, the microphone 130C, the headphone jack 130D, the application processor, and the like.

The audio module 130 is configured to convert digital audio information into an analog audio signal for output, and is also configured to convert an analog audio input into a digital audio signal. The speaker 130A, also referred to as a "loudspeaker", is configured to convert an audio electrical signal into a sound signal. The receiver 130B, also referred to as an "earpiece", is configured to convert an electrical audio signal into a sound signal. The microphone 130C, also referred to as "voice tube" or "mike", is configured to convert a sound signal into an electrical signal. The headphone jack 130D is configured to connect to a wired headphone.

In this embodiment of this application, in a case that a voice-to-text function is enabled, the electronic device may enable the microphone 130C to acquire a sound signal, and convert the sound signal into corresponding text.

The touch sensor 160 is also referred to as a "touch device". The touch sensor 160 may be disposed on the display screen 140, and the touch sensor 160 and the display screen 140 form a touchscreen, which is also referred to as a "touch panel". The touch sensor 160 is configured to detect a touch operation performed on or near the touch sensor. The touch sensor may transfer the detected touch operation to the application processor, to determine a touch event type. A visual output related to the touch operation may be provided through the display screen 140. In some other embodiments, the touch sensor 160 may alternatively be arranged on a surface of the electronic device at a position different from that of the display screen 140.

In this embodiment of this application, the electronic device may detect, by using the touch sensor 160, an operation such as tapping or swiping, performed by a user on the display screen 140, to implement the material processing method shown in FIG. 3 to FIG. 31.

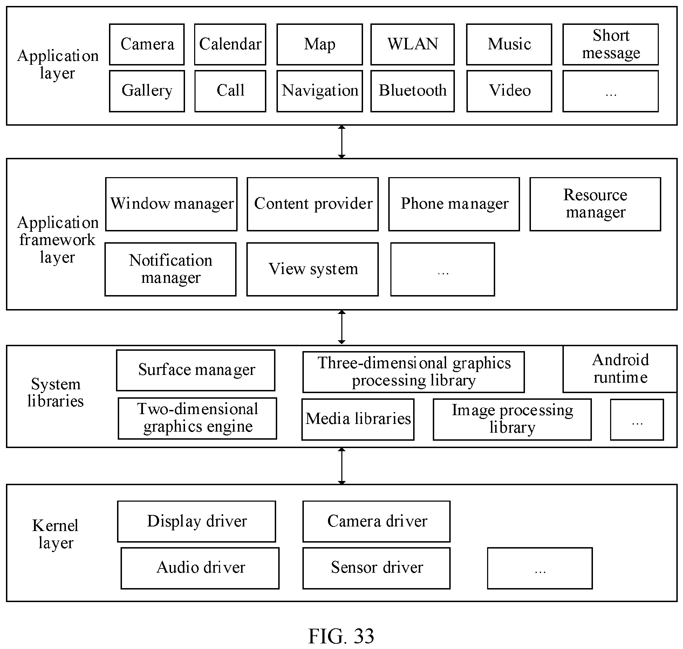

FIG. 33 is a diagram of a software structure of an electronic device according to an embodiment of this application.

A software system of the electronic device may adopt a layered architecture, an event-driven architecture, a microkernel architecture, a microservice architecture, or a cloud architecture. In this embodiment of this application, an Android operating system with the layered architecture is taken as an example to describe the software structure of the electronic device.

It should be understood that in the layered architecture, software is divided into several layers, each layer has a clear role and task, and communication between the layers may be implemented by using software interfaces.

As shown in FIG. 33, an Android operating system may be divided into four layers, which are an application layer, an application framework layer, Android runtime (Android runtime) and system libraries, and a kernel layer, respectively, from top to bottom. The application layer may include a series of application packages.

As shown in FIG. 33, the application packages may include applications such as a camera, a gallery, a calendar, a call, a map, a navigator, a WLAN, Bluetooth, music, a video, and a short message.

The application program framework layer provides an application programming interface (application programming interface, API) and a programming framework for the applications at the application program layer. The application framework layer includes some predefined functions.

As shown in FIG. 33, the application framework layer may include a window manager, a content provider, a view system, a phone manager, a resource manager, a notification manager, and the like.

The window manager is configured to manage a window program. The window manager may obtain a size of a display screen, determine whether there is a status bar, lock the screen, capture the screen, and the like.

The content provider is configured to store and obtain data, and enable the data to be accessible by an application. The data may include a video, an image, audio, calls that are made and answered, browsing history and bookmarks, a telephone directory, and the like.

The view system includes visual controls such as a control for displaying text and a control for displaying an image. The view system may be configured to construct an application. A display interface may be composed of one or more views. For example, a display interface including a short message notification icon may include a view for displaying text and a view for displaying an image.

The phone manager is configured to provide a communication function for the electronic device, for example, call status management (including connecting, hanging-up, and the like).

The resource manager provides various resources for an application, for example, a localized character string, an icon, an image, a layout file, and a video file.

The notification manager enables an application to display notification information in a status bar, and may be configured to convey a notification-type message. The notification-type message may automatically disappear after a brief display without requiring user interaction. For example, the notification manager is configured to notify download completion, prompt a message, and the like. The notification manager may alternatively be a notification that appears in the form of a graphic or scroll bar text in a top status bar of the system, for example, a notification of an application run in the backend, or may be a notification that appears in the form of a dialog window on the screen. For example, text information is prompted in the status bar, an alert sound is made, the terminal device vibrates, or an indicator light blinks.

Android Runtime includes core libraries and a virtual machine. Android Runtime is responsible for scheduling and managing Android.

The core libraries include two parts: a function that needs to be invoked in Java language and core libraries of Android.

The application layer and the application framework layer are run in the virtual machine. The virtual machine executes Java files of the application layer and the application framework layer as binary files. The virtual machine is configured to perform functions of object life cycle management, stack management, thread management, security and exception management, garbage collection, and the like.

The system libraries may include a plurality of function modules, for example, a surface manager (surface manager), media libraries (Media Libraries), a three-dimensional graphics processing library (for example, open graphics library for embedded systems (open graphics library for embedded systems, OpenGL ES), and a 2D graphics engine (for example, a skia graphics library (skia graphics library, SGL)).

The surface manager is configured to manage a display sub-system, and provide fusion of 2D and 3D layers for a plurality of applications.

The media libraries support playback and recording of a plurality of audio formats, playback and recording of a plurality of video formats, and static image files. The media libraries can support a plurality of audio and video encoding formats, such as: MPEG4, H.264, Moving Picture Experts Group Audio Layer III (Picture Experts Group Audio Layer III, MP3), Advanced Audio Coding (Advanced Audio Coding, AAC), Adaptive Multi-Rate (Adaptive Multi-Rate, AMR), Joint Photographic Experts Group (Joint Photographic Experts Group, JPG), and Portable Network Graphics (Portable Network Graphics, PNG).

The three-dimensional graphics processing library is configured to implement three-dimensional graphics drawing, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In this embodiment of this application, the electronic device may use the foregoing software system to implement the foregoing material processing method shown in FIG. 3 to FIG. 31.

The foregoing embodiments are merely intended for describing the technical solutions of this application, but not for limiting this application. Although this application is described in detail with reference to the foregoing embodiments, a person of ordinary skill in the art is to understand that modifications may still be made to the technical solutions described in the foregoing embodiments or equivalent replacements may be made to some technical features thereof, as long as such modifications or replacements do not cause the essence of corresponding technical solutions to depart from the spirit and scope of the technical solutions of the embodiments of this application.

## Claims

1. A material processing method, applied to an electronic device comprising a display screen, wherein the method comprises:
displaying a first interface of a first application in a full-screen display mode, wherein the first interface comprises a first initial material;
enabling a split-screen display mode of the display screen in response to a first target operation, wherein the split-screen display mode refers to division of the display screen into an original application presentation area, a material presentation area, and an operation area for display, the original application presentation area comprises the first interface, the operation area comprises a first option, the material presentation area comprises a first material icon, and the first material icon indicates a material that has been collected into a target application;
collecting the first initial material into the target application in response to a first operation for the first option, and newly adding a second material icon to the material presentation area, wherein the second material icon corresponds to the first initial material;
displaying a second interface of a second application in the full-screen display mode after the split-screen display mode is disabled, wherein the second interface comprises a second initial material, and a type of the second initial material is different from a type of the first initial material;
enabling the split-screen display mode of the display screen in response to a second target operation, wherein the original application presentation area comprises the second interface, the material presentation area comprises the first material icon and the second material icon, switching from the first option to a second option is implemented in the operation area, and the first option is different from the second option;
collecting the second initial material into the target application in response to a second operation for the second option, and newly adding a third material icon to the material presentation area, wherein the third material icon corresponds to the second initial material; and
switching, in response to a third operation for any material icon, from the split-screen display mode to a material preview interface for display, wherein the material preview interface corresponds to a material indicated by the material icon.

2. The method according to claim 1, wherein displaying the second interface of the second application in the full-screen display mode after the split-screen display mode is disabled comprises:
disabling the split-screen display mode in response to a fourth operation, and displaying a third interface in the full-screen display mode, wherein the third interface comprises at least an application icon indicating the second application; and
displaying the second interface of the second application in the full-screen display mode in response to a fifth operation for the application icon indicating the second application.

3. The method according to claim 1, wherein the operation area further comprises a close button, and displaying the second interface of the second application in the full-screen display mode after the split-screen display mode is disabled comprises:
disabling the split-screen display mode in response to a sixth operation for the close button, and displaying the first interface of the first application in the full-screen display mode;
switching, in response to a seventh operation, from the first interface to a third interface for display, wherein the third interface comprises at least an application icon indicating the second application; and
displaying the second interface of the second application in the full-screen display mode in response to an eighth operation for the application icon indicating the second application.

4. The method according to any one of claims 1 to 3, wherein before responding to the second target operation, the method further comprises:
displaying, in response to a first stage of a ninth operation for a sub-material comprised in the first initial material, the sub-material in a floating manner above the first initial material, wherein the type of the first initial material is different from a type of the sub-material;
collecting the sub-material into the target application in response to a second stage of the ninth operation for the sub-material, wherein the first stage and the second stage are consecutive; and
newly adding a fourth material icon to the material presentation area, wherein the fourth material icon corresponds to the sub-material.

5. The method according to any one of claims 1 to 4, wherein the method further comprises:
displaying a fourth interface of a third application in the full-screen display mode;
enabling the split-screen display mode of the display screen in response to a third target operation, wherein the original application presentation area comprises the fourth interface, and the material presentation area comprises at least the first material icon, the second material icon, and the third material icon;
presenting a target material icon in a selected state in response to a tenth operation for the target material icon in the material presentation area, wherein the target material icon is any one of the plurality of material icons; and
distributing, in response to an eleventh operation for the target material icon, a material indicated by the target material icon to the fourth interface.

6. The method according to any one of claims 1 to 5, wherein the material preview interface comprises a share button, and the method further comprises:
displaying a share card on the material preview interface in response to a twelfth operation for the share button, wherein the share card comprises a plurality of options indicating different formats, different devices, different applications, saving, and printing; and
sharing, in response to a thirteenth operation for the share card, the material indicated by the target material icon based on a selected option.

7. The method according to any one of claims 1 to 6, wherein the type of the first initial material and the type of the second initial material comprise any two of a web page, a document, and an image.

8. The method according to claim 7, wherein the first option corresponds to the type of the first initial material, and the second option corresponds to the type of the second initial material;
when the type of the first initial material is a web page, the first option is a web page favorites option; when the type of the first initial material is a document, the first option is a document favorites option; or when the type of the first initial material is an image, the first option is an image favorites option; and
when the type of the second initial material is a web page, the second option is a web page favorites option; when the type of the second initial material is a document, the second option is a document favorites option; or when the type of the second initial material is an image, the second option is an image favorites option.

9. The method according to any one of claims 1 to 8, wherein after responding to the first operation for the first option, the method further comprises:
displaying a collection state icon, wherein the collection state icon is displayed in a floating manner in the original application presentation area;
obtaining, in response to a fourteenth operation for a first control comprised in the collection state icon, a first material based on the first initial material;
collecting the first material into the target application through the collection state icon in response to a fifteenth operation for a second control comprised in the collection state icon; and
newly adding a fifth material icon to the material presentation area, wherein the fifth material icon corresponds to the first material.

10. The method according to claim 9, wherein the type of the first initial material is a video, and the first option is a video excerpt option.

11. The method according to any one of claims 1 to 10, wherein the operation area further comprises a screenshot option, and before responding to the second target operation, the method further comprises:
collecting, in response to a sixteenth operation for the screenshot option, a second material obtained based on the first initial material into the target application, wherein a type of the second material is an image; and
newly adding a sixth material icon to the material presentation area, wherein the sixth material icon corresponds to the second material.

12. The method according to claim 11, wherein the method further comprises:
displaying, in response to a seventeenth operation for the screenshot option, an operation option sub-menu in a floating manner above the screenshot option, wherein the operation option sub-menu comprises the screenshot option and a long screenshot option;
collecting, in response to an eighteenth operation for the long screenshot option and a nineteenth operation for the original application presentation area, a third material obtained based on the first initial material into the target application, wherein a type of the third material is a long image; and
newly adding a seventh material icon to the material presentation area, wherein the seventh material icon corresponds to the third material.

13. The method according to any one of claims 1 to 12, wherein the operation area further comprises a content identification option, and before responding to the second target operation, the method further comprises:
displaying display content in the original application presentation area in a target form in response to a twentieth operation for the content identification option, and displaying a favorite button, wherein the favorite button is displayed in a floating manner above the display content;
presenting partial display content in a selected state in response to a twenty-first operation;
collecting the partial display content in the selected state into the target application in response to a twenty-second operation for the favorite button; and
newly adding an eighth material icon to the material presentation area, wherein the eighth material icon corresponds to the partial display content in the selected state.

14. The method according to claim 13, wherein the target form comprises at least any one of a highlighted form, a word-segmented block form, and a sequentially tiled form that is floatingly displayed in the original application presentation area.

15. The method according to claim 6, wherein the first target operation, the second target operation, and the third target operation are all three-finger swipe-down operations.

16. The method according to claim 5, wherein the first stage of the ninth operation is a long-press operation, and the second stage of the ninth operation is dragging or throwing.

17. The method according to any one of claims 1 to 16, wherein the material presentation area is located in a left hot zone or a right hot zone of the display screen, and the operation area is located in a top area of the display screen.

18. An electronic device, comprising:
one or more processors and a memory, wherein
the memory is coupled to the one or more processors, the memory is configured to store computer program code, the computer program code comprises computer instructions, and the one or more processors invoke the computer instructions to cause the electronic device to perform the method according to any one of claims 1 to 17.

19. A computer-readable storage medium, wherein the computer-readable storage medium stores a computer program, and the computer program, when executed by an electronic device, causes the electronic device to perform the method according to any one of claims 1 to 17.
